(19) Europäisches Patentamt
European Patent Office
Office européen des brevets

(11) **EP 2 101 304 A1**

(12) **EUROPEAN PATENT APPLICATION**
published in accordance with Art. 153(4) EPC

(43) Date of publication:
**16.09.2009 Bulletin 2009/38**

(51) Int Cl.:
*G08G 1/00* (2006.01)     *G06F 19/00* (2006.01)
*H04B 7/26* (2006.01)     *G09B 9/05* (2006.01)

(21) Application number: **07850014.7**

(22) Date of filing: **04.12.2007**

(86) International application number:
**PCT/JP2007/073364**

(87) International publication number:
**WO 2008/069189 (12.06.2008 Gazette 2008/24)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.12.2006 PCT/JP2006/324166**

(71) Applicant: **Fujitsu Limited**
**Kawasaki-shi, Kanagawa 211-8588 (JP)**

(72) Inventors:
• **GOMI, Toshiaki,c/o Fujitsu Limited**
**Kawasaki-shi**
**Kanagawa 211-8588 (JP)**

• **FUJITA, Takushi, c/o Fujitsu Limited**
**Kawasaki-shi**
**Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **OPERATION SIMULATION EVALUATION METHOD, OPERATION SIMULATION EVALUATION DEVICE, AND COMPUTER PROGRAM**

(57)     There are provided: a driving simulation evaluation method and a driving simulation evaluation apparatus for virtually realizing an actual sensing situation and an actual wireless communication situation so as to test the influence of a change in performance parameters on safe driving at a low cost in a short period of time; and a computer program for realizing this driving simulation evaluation apparatus.

On the basis of other-vehicle information and the like, a virtual sensing part (20) virtually realizes a sensor for detecting an object, then generates information concerning the object, and then outputs the information to a virtual communication part (40). The virtual communication part (40) virtually realizes a communication situation up to the time that the data is transmitted to a vehicle-mounted apparatus, so as to virtually generate a communication delay situation, a radio arrival rate situation, a communication error situation, and the like at the time of data communication, and then outputs data in which these situations are taken into consideration, to a virtual vehicle-mounted device (60). On the basis of the inputted data, the virtual vehicle-mounted device (60) displays traffic information to be provided to a driver onto a driving assist monitor (14).

FIG. 1

**Description**

FIELD

The present invention relates to driving of a vehicle, and relates to: a driving simulation evaluation method and a driving simulation evaluation apparatus for simulating and evaluating in real time the influence of a change in a sensing situation, a wireless communication situation, and the like on safe driving in a situation that safe driving assist service is provided by employing a sensing technique and wireless communication; and a computer program for realizing this driving simulation evaluation apparatus.

BACKGROUND

As measures for traffic accident reduction, development of an "infrastructure-cooperative safe driving assist technique" is on going in which traffic information concerning vehicles and pedestrians detected by sensors installed on a road side is transmitted to a vehicle-mounted device by wireless communication and in which the detected traffic information is displayed on a monitor of the vehicle-mounted device that danger of an accident is notified to the driver in advance or alternatively vehicle control is performed for avoiding the accident.

In this driving assist technique, the contents of realized service are affected complicatedly by various factors (performance parameters) like: sensing accuracy and sensing range of sensors such as a video camera, an ultrasonic sensor, and a millimeter wave radar; a communication area, communication quality, and a communication band of the wireless communication; and a method and a timing of notification to the driver. Thus, these factors are expected to have influences on an effect of traffic accident reduction. It is not yet satisfactorily confirmed what particular levels of these performance parameters provide an accident reduction effect of a particular level. Accordingly, for the purpose of testing the influence of a fluctuation in the performance parameters on the traffic accident reduction effect, an actual-situation test is preferably performed with actually installing sensors equipment and a communication equipment. This requires a large cost and a long time.

Thus, development of a technique is on going that can simulate a driving situation in real time so as to evaluate the influence of a fluctuation in the performance parameters on safe driving. For example, a road traffic system evaluation simulation apparatus has been proposed that simulates the behavior of a driven vehicle and surrounding vehicles in order to reproduce in real time the situation of driving by a driver, then simulates various relations between the vehicle and the infrastructure (e.g., the road, the time zone, and the weather), and then displays the results in three dimensions (see Patent Document 1).

[Patent Document 1] Japanese Laid-Open Patent Publication No. H11-272158 (1999))

SUMMARY

[Problems to Be Solved by the Invention]

Nevertheless, in the apparatus according to Patent Document 1, when the information concerning another vehicle (e.g., position information) is to be provided to the driver of the own vehicle, simulation is performed on the assumption that wireless communication is established between the own vehicle and the other vehicle. Thus, position information concerning another vehicle not provided with a wireless communication function cannot be acquired. That is, vehicles not provided with a wireless function cannot be adopted as targets of simulation. In practical situations, not all vehicles are provided with a wireless communication function. Thus, for the purpose of simulating a practical traffic circumstance, other vehicles not provided with a wireless function need also be treated as targets of simulation. Further, actual wireless communication is affected by various factors like the distance between the antenna and the vehicle-mounted device, the communication delay, and the radio arrival rate (e.g., the communication intensity and alternatively the receiving sensitivity are taken into consideration). Nevertheless, these factors are not taken into consideration. Thus, the apparatus according to Patent Document 1 is insufficient for practical simulation.

The present technique has been devised in view of this situation. An object of the present technique is to provide: a driving simulation evaluation method and a driving simulation evaluation apparatus for virtually realizing a practical sensing situation and a practical wireless communication situation so as to test the influence of a change in performance parameters on safe driving at a low cost in a short period of time; and a computer program for realizing this driving simulation evaluation apparatus.

[Means for Solving the Problems]

In a first aspect, a second aspect, and an eleventh aspect, detection simulation means virtually realizes a sensors such as a video camera, an ultrasonic sensor, and a millimeter wave radar, and virtually generates a sensing situation. In response to received driving operation, the detection simulation means simulates detection of an object (e.g., a vehicle and a pedestrian) on a road on the basis of the generated traffic circumstance of the road (e.g., environmental information such as the information concerning the driven vehicle, the information concerning other vehicles, the weather, the time of day, and the information concerning pedestrians). Communication simulation means virtually generates a communication situation. That is, the communication simulation means simulates the situation (e.g., a communication delay, a change in the radio arrival situation, and a communication error) of communication of information (data) concerning the detection-simulated object to the vehicle-mounted apparatus. Then, in accordance with the simulated communication situation, the detection-simulated object is displayed so that the information concerning the traffic circumstance of the road is provided to the driver who operates the simulator. This permits inexpensive real-time test and evaluation of the influence, on safe driving, of a change in the performance parameters such as the sensing accuracy, the sensing range, the communication area, the communication quality, the communication band, and the method and the timing of notification to the driver.

In a third aspect, detection simulation means simulates one or a plurality of detection parts for detecting an object, while communication simulation means simulates one or a plurality of communication parts that perform communication of information concerning an object. When a plurality of detection parts or a plurality of communication parts are employed, the connection simulation means simulates a connection situation between the detection part or parts and the communication part or parts. By virtue of this, in addition to simulation of a simple situation that one communication part (communication antenna) is connected to one detection part (sensor), a more complicated configuration can be simulated like a situation that a plurality of sensors are connected to one communication antenna or alternatively a situation that one sensor is connected to a plurality of communication antennas.

In a fourth aspect, detection simulation means simulates detection of an object in accordance with a detection condition set up by detection condition setting means. Detection conditions that can be set up include: the position coordinates, the image taking direction, the view angle, and the image taking area of a virtually realized video camera; and the effective area of a virtually realized sensor. When the detection condition is set up appropriately, the performance of the sensor can be adjusted. This permits easy evaluation of a change in the information concerning traffic circumstance to be provided to the driver caused by a change in the detection condition.

In a fifth aspect, detection accuracy distribution around a detection point where an object is to be detected is stored. Then, on the basis of the stored detection accuracy distribution, detection simulation means simulates detection of an object. Since detection accuracy distribution is stored in advance, necessity is avoided for complicated arithmetic processing that takes into consideration the influences of the position where the sensor is installed, geographical features around the position where the sensor is installed, the positions of buildings, the position of the road, and the like. This permits real-time simulation of the situation of detection accuracy of the sensor on the basis of the stored detection accuracy distribution.

In a sixth aspect, communication simulation means simulates a communication situation in accordance with a communication condition set up by communication condition setting means. Communication conditions that can be set up include the antenna position, the antenna directivity, the area distance, the radio arrival rate, the communication delay time, and the communication error rate. When the communication condition is set up appropriately, communicative performance can be adjusted. This permits easy evaluation This permits easy evaluation of a change in the information concerning traffic circumstance to be provided to the driver caused by a change in the communication condition such as the radio arrival situation and the communication available area.

In a seventh aspect, distribution of radio arrival situation around a communication point where communication of information concerning an object is to be performed is stored. Then, on the basis of the stored distribution of radio arrival situation, communication simulation means simulates the communication situation. Since the distribution of radio arrival situation is stored in advance, necessity is avoided for complicated arithmetic processing that takes into consideration the influences of the position where the antenna is installed, geographical features around the position where the antenna is installed, the positions of buildings, the position of the road, and the like. This permits real-time simulation of a complicated communication situation on the basis of the stored distribution of radio arrival situation.

In an eighth aspect, in response to received driving operation, an object detection-simulated by detection simulation means is recorded, or alternatively a communication situation simulated by communication simulation means is recorded. This recording of the result of simulation evaluation permits detailed evaluation of the influences of a difference in the sensor situation and a difference in the communication situation on the providing of the information concerning the traffic circumstance to the driver. Further, the recording permits detailed evaluation of what kind of a different influence is caused by operation by the driver. Thus, a difference in the degree of influence can also be evaluated between a plurality of drivers.

In a ninth aspect, intervention control means is provided that controls intervention operation of intervening in driving operation received by driving operation part. The intervention control means determines the necessity or non-necessity of intervention operation on the basis of information concerning an object detection-simulated by detection simulation means. Then, when it is determined that intervention operation is necessary, the intervention control means outputs to the driving operation part an intervention control signal that represents intervention operation. Then, the driving operation part receives the intervention operation represented by the inputted intervention control signal, as driving operation with priority. Thus, intervention operation such as brake operation and steering operation based on the situation of the detection-simulated object is performed so that the behavior of the vehicle is changed. This permits simulation of intervention operation, and hence evaluation of intervention control.

In a tenth aspect, in a case that means for display a detection-simulated object or intervention control means is to be used, these pieces of means are combined with means for notifying the detection-simulated object by speech synthesis. This permits evaluation of the selection and the combination of the assist methods consisting of driving assist by means of display and driving assist by means of intervention in accordance with the driving situation. Further, since speech synthesis is employed, evaluation of driving assist based on the auditory sense is achieved. This expands the range of selection and combination of assist methods.

[Effects of the Invention]

In the first aspect, the second aspect, and the eleventh aspect, an actual sensing situation and an actual wireless communication situation are virtually realized, so that the influence of a change in performance parameters on safe driving can be tested at a low cost in a short period of time.

In the third aspect, a more complicated configuration can be simulated like a situation that a plurality of sensors are connected to one communication antenna or alternatively a situation that one sensor is connected to a plurality of communication antennas.

In the fourth aspect, easy evaluation is achieved for a change in the information concerning traffic circumstance to be provided to the driver caused by a change in the detection condition of the sensor.

In the fifth aspect, the situation of detection accuracy of the sensor can be simulated in real time.

In the sixth aspect, easy evaluation is achieved for a change in the information concerning traffic circumstance to be provided to the driver caused by a change in the communication condition.

In the seventh aspect, a complicated communication situation can be simulated in real time.

In the eighth aspect, detailed evaluation is achieved for the influences of a difference in the sensor situation and a difference in the communication situation on the providing of the information concerning the traffic circumstance to the driver. Further, detailed evaluation is achieved for what kind of a different influence is caused by operation by the driver. Thus, a difference in the degree of influence can also be evaluated between a plurality of drivers.

In the ninth aspect, intervention operation such as brake operation and steering operation based on the situation of the detection-simulated object is performed so that the behavior of the vehicle is changed. This permits simulation of intervention operation. Thus, the influence, on safe driving, of a behavior change in a vehicle caused by intervention control can be tested at a low cost in a short period of time.

In the tenth aspect, in addition to driving assist employing display and intervention, driving assist employing a speech can be simulated. This permits evaluation of which kind of assist is suitable for what kind of driving situation.

BRIEF DESCRIPTION OF THE DRAWINGS

FIG. 1 is a block diagram illustrating an example of a driving simulation evaluation apparatus according to the present technique;

FIG. 2 is an explanation diagram illustrating an example of a driving simulation situation;

FIG. 3 is a block diagram illustrating an example of a virtual sensing part;

FIG. 4 is an explanation diagram illustrating an example of sensor parameter setting;

FIG. 5 is an explanation diagram illustrating an example of frame data;

FIG. 6 is a block diagram illustrating an example of a virtual communication part;

FIG. 7 is an explanation diagram illustrating an example of communication parameter setting;

FIG. 8 is an explanation diagram illustrating an example of error control;

FIG. 9 is an explanation diagram illustrating an example of a radio arrival rate;

FIG. 10 is an explanation diagram illustrating an example of distribution of radio arrival situation;

FIG. 11 is an explanation diagram illustrating an example of a data format for radio arrival rate;

FIG. 12 is an explanation diagram illustrating an example of an interpolation method for a radio arrival rate;

FIG. 13 is a block diagram illustrating an example of a virtual vehicle-mounted device;

FIG. 14 is an explanation diagram illustrating an example of an image displayed on a driving assist monitor;

FIG. 15 is an explanation diagram illustrating a display example of a driving assist monitor;

FIG. 16 is a flow chart illustrating an example of a processing procedure of driving simulation evaluation;

FIG. 17 is a block diagram illustrating an example of a driving simulation evaluation apparatus according to Embodiment 2;

FIG. 18 is an explanation diagram illustrating an example of a driving simulation situation;

FIG. 19 is a block diagram illustrating an example of a virtual sensing part;

FIG. 20 is an explanation diagram illustrating an example of a measurement data calculation method in a data conversion part;

FIG. 21 is an explanation diagram illustrating an example of a measurement data format;

FIG. 22 is an explanation diagram illustrating an example of a connection situation in a connection management part;

FIG. 23 is an explanation diagram illustrating an example of a data structure of a connection management part;

FIG. 24 is an explanation diagram illustrating an example of a measurement data format synthesized by a synthesis node;

FIG. 25 is a block diagram illustrating an example of a virtual communication part;

FIG. 26 is an explanation diagram illustrating an example of an image displayed on a driving assist monitor;

FIG. 27 is a block diagram illustrating an example of a driving simulation evaluation apparatus according to Embodiment 3;

FIG. 28 is a block diagram illustrating an example of an intervention control part;

DESCRIPTION OF THE REFERENCE NUMERALS

10 Driving environment part; 11 Field-of-view monitor; 12 Driving operation input part; 13 Operation recording part; 14 Driving assist monitor; 20 Virtual sensing part; 21 Sensor parameter setting part; 22 External information buffer; 23 Video camera sensor part; 24, 25 Object sensor part; 40 Virtual communication part; 41 Communication parameter setting part; 42 Own-vehicle information holding part; 43 Antenna part; 44 Other-vehicle information holding part; 60 Virtual vehicle-mounted device; 61 Frame data receiving part; 62 Image expansion part; 63 Noise synthesizing part; 64 Timer reset part; 65 Receiving interval monitoring timer; 70 Intervention control part; 71 Own-vehicle environment data receiving part; 72 Own-vehicle environment data buffer; 73 Own-vehicle course prediction part; 74 Measurement data receiving part; 75 Measurement data buffer; 76 Oncoming vehicle course prediction part; 77 Collision determination part; 78 Intervention ignition part; 80 Connection management part; 90 Vehicle behavior surrounding environment generating part; 91 Vehicle behavior recording part; 92 Sensing recording part; 93 Accuracy map part; 94 Sensor parameter holding part; 95 Communication situation map part; 96 Communication parameter holding part; 97 Communication recording part; 98 Information providing recording part; 211, 411 Installation information; 231, 241 Period timer part; 232 Camera image generating part; 233 Frame compression part; 234 Frame transfer part; 242 Data conversion part; 243 Data fluctuation generating part; 244 Data transfer part; 431 Communication period generating part; 432 Communication area determination part; 433 Delay control part; 434 Radio arrival rate control part; 435 Error control part; 436 Frame buffer holding part; 437 Packet dividing part; 438 Band allocation control part; 439 Data holding part.

DESCRIPTION OF EMBODIMENTS

Embodiment 1

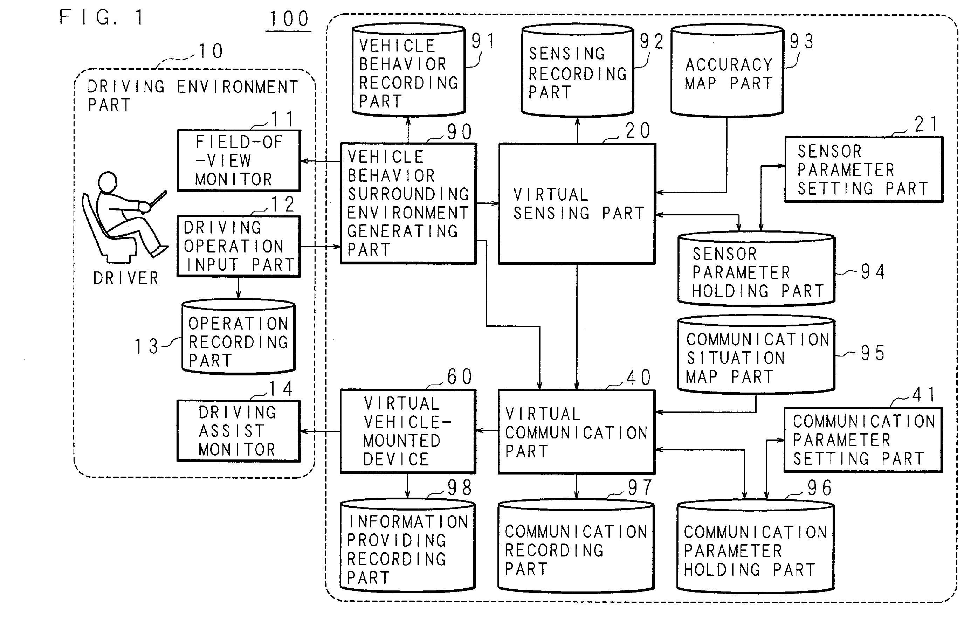

The present technique described below with reference to the drawings illustrating embodiments. FIG. 1 is a block diagram illustrating an example of a driving simulation evaluation apparatus 100 according to the present technique. The driving simulation evaluation apparatus 100 according to the present technique includes: a driving environment part 10 that includes a field-of-view monitor 11, a driving operation input part 12, an operation recording part 13 for recording the operation of a driver, and a driving assist monitor 14; a virtual sensing part 20 implemented by a dedicated hardware circuit or alternatively by a computer constructed from one or a plurality of CPUs, RAMs, ROMs, and the like and a storage device such as one or a plurality of hard disk drives and CD-ROM drives; a virtual communication part 40, a virtual vehicle-mounted device 60, a vehicle behavior surrounding environment generating part 90, a sensor parameter setting part 21, a communication parameter setting part 41, a vehicle behavior recording part 91, a sensing recording part 92, an accuracy map part 93, a sensor parameter holding part 94, a communication situation map part 95, a communication parameter holding part 96, a communication recording part 97, and an information providing recording part 98.

The vehicle behavior surrounding environment generating part 90 serves as a drive simulator so as to virtually generate, in real time, information concerning the behavior of a driven vehicle and the traffic circumstance around the driven vehicle on the basis of driver's driving operation (e.g., driving information such as the steering wheel inclination and the accelerator opening) received through the driving operation input part 12, and then outputs the generated information to the field-of-view monitor 11, the virtual sensing part 20, and the virtual communication part 40.

In response to driving operation of the driver, the field-of-view monitor 11 displays the driver's field of view on the basis of the information inputted from the vehicle behavior surrounding environment generating part 90.

On the basis of the information (e.g., own-vehicle information, other-vehicle information, and environmental information including pedestrian information) inputted from the vehicle behavior surrounding environment generating part 90, the virtual sensing part 20 virtually implements a sensor (e.g., a video camera, an ultrasonic sensor, and a millimeter wave radar) for detecting an object such as a vehicle and a pedestrian on a road. The virtual sensing part 20 generates information concerning an object detected by the sensor (information concerning a vehicle, a pedestrian, and the like), then converts the generated information into a given communication format, and then outputs the converted data to the virtual communication part 40. Details of the virtual sensing part 20 are described later.

On the basis of the information (e.g., own-vehicle information and environmental information) inputted from the vehicle behavior surrounding environment generating part 90 and the data inputted from the virtual sensing part 20, the virtual communication part 40 virtually realizes a communication situation up to the time that the data transmitted from the sensor is transmitted to a vehicle-mounted apparatus. The virtual communication part 40 virtually generates a communication delay situation, a radio arrival rate situation, a communication error situation, and the like at the time of communication of the data converted into a given communication format, and then outputs data in which these situations are taken into consideration, to a virtual vehicle-mounted device 60. Details of the virtual communication part 40 are described later.

The virtual vehicle-mounted device 60 virtually realizes a vehicle-mounted apparatus. That is, on the basis of the data inputted from the virtual communication part 40, the virtual vehicle-mounted device 60 performs processing of displaying traffic information to be provided to a driver onto the driving assist monitor 14. Details of the virtual vehicle-mounted device 60 are described later.

The sensor parameter setting part 21 receives setting of sensor parameters such as the sensing possible range, the sensor accuracy, the sensing processing time, the sensor installation position, and the number of sensors. The set-up sensor parameters are held by the sensor parameter holding part 94. The sensor parameters may be set up at appropriate values at each time of driving simulation:

The communication parameter setting part 41 receives setting of communication parameters such as the communication available area, the radio arrival situation, the communication delay time, the antenna installation position, and the number of antennas. The set-up communication parameters are held by the communication parameter holding part 96.

The accuracy map part 93 is constructed by measuring or calculating, in advance, data that represents the situations of sensor accuracy, sensor sensitivity, sensing possible range, and the like which dependent on the place where the sensor is installed, and then storing as a database the measurement result or the calculation result. Thus, necessity is avoided for arithmetic processing of calculating the necessary data at the time of driving simulation. That is, driving simulation can be continued merely by referring to the stored data. This realizes real-time processing having satisfactory response.

The communication situation map part 95 is constructed by measuring or calculating, in advance, data that represents the situations of communication intensity, radio arrival rate, and the like which depend on the place where the antenna is installed, and then storing as a database the measurement result or the calculation result. Thus, necessity is avoided for arithmetic processing of calculating the necessary data at the time of driving simulation. That is, driving simulation can be continued merely by referring to the stored data. This realizes real-time processing having satisfactory response.

The vehicle behavior recording part 91, the sensing recording part 92, the communication recording part 97, and the information providing recording part 98 record the data obtained in driving simulation. Here, in place of such a separated configuration, these recording parts may be integrated into a single recording part.

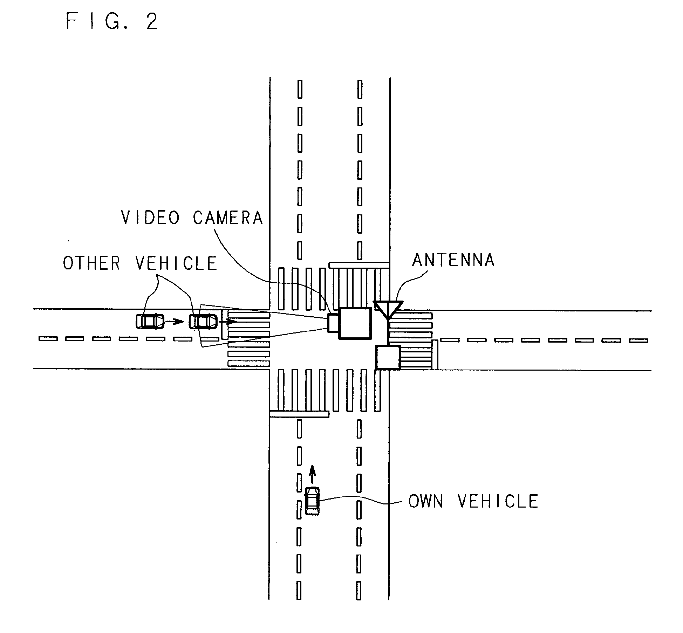

FIG. 2 is an explanation diagram illustrating an example of a driving simulation situation. FIG. 2 illustrates an example of a situation of driving simulated by the driving simulation evaluation apparatus 100 according to the present technique. As illustrated in FIG. 2, the driving simulation evaluation apparatus 100 may simulate (perform driving simulation) a situation that a video camera and an antenna for taking a video of vehicles (other vehicles) running toward a crossing on a road that crosses with another one at the crossing and of pedestrians and the like near the crossing are installed near the crossing, and that the video taken by the video camera is transmitted through the antenna to the own vehicle running on the other road.

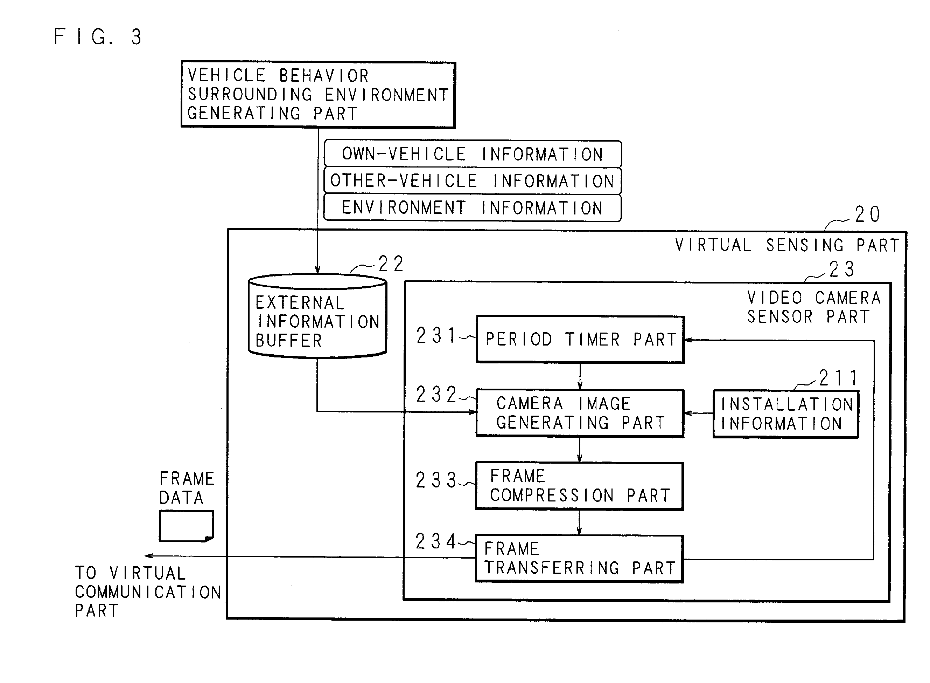

FIG. 3 is a block diagram illustrating an example of the virtual sensing part 20. The virtual sensing part 20 includes an external information buffer 22 and a video camera sensor part 23. The video camera sensor part 23 includes a period timer part 231, a camera image generating part 232, a frame compression part 233, a frame transfer part 234, and installation information 211 set up by the sensor parameter setting part 21.

The external information buffer 22 temporarily holds own-vehicle information (e.g., the position, the direction, and the speed), other-vehicle information (e.g., the position, the direction, and the speed), and environmental information (e.g., road coordinates that represent the area of a road, the time of day, the position or the orientation of a building, the weather, and a pedestrian) inputted from the vehicle behavior surrounding environment generating part 90. Here, when new information is inputted, the information held in the external information buffer 22 is updated.

The period timer part 231 generates a trigger signal for setting up the period of sensing. For example, when the sensor is a video camera, a frame rate such as 10 and 30 per second can be set up.

On the basis of the trigger signal generated by the period timer part 231, the camera image generating part 232 acquires the own-vehicle information, the other-vehicle information, and the environmental information held in the external information buffer 22. Then, with referring to the installation information 211, the camera image generating part 232 generates an image taken by the video camera by the unit of frame (data of one screen).

The frame compression part 233 compresses the data of the image inputted from the camera image generating part 232, by using a compression method such as JPEG (Joint Photographic Experts Group) and PNG (Portable Network Graphics).

The frame transfer part 234 outputs to the virtual communication part 40 the frame data compressed by the frame compression part 233.

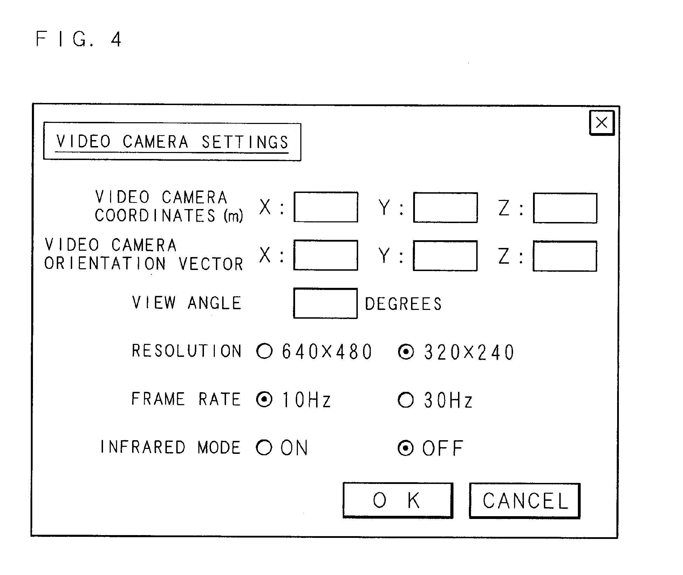

FIG. 4 is an explanation diagram illustrating an example of sensor parameter setting. As illustrated in FIG. 4, sensor parameters that can be set up include: the video camera coordinates; a vector that represents the direction of image taking of the video camera; the view angle of the video camera lens; the resolution; the frame rate; and the selection of ON/OFF of an infrared mode. Here, this example of sensor parameter setting is exemplary and not restrictive.

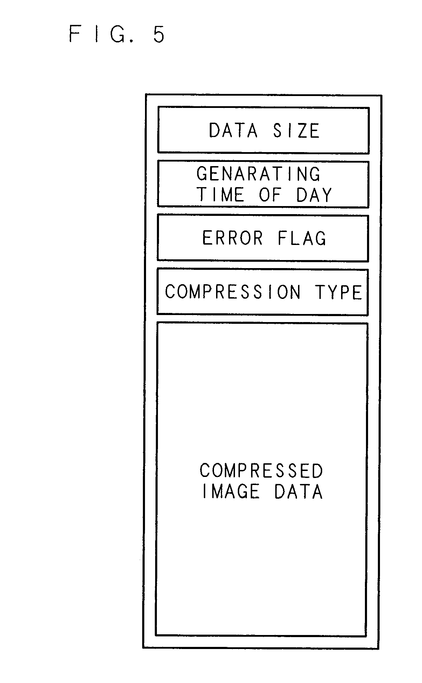

FIG. 5 is an explanation diagram illustrating an example of frame data. The frame data is constructed from individual blocks of: data size that represents the amount of data of the entire one-frame data; the generating time of day that represents the time of day of generation in the virtual sensing part 20; error flag that has a value of "1" when an error is added in the virtual communication part 40 and that has a value of "0" when an error is not added; compression type (compression method) that represents the compression format name of the frame data; and compressed image data. Here, this configuration of frame data is exemplary and not restrictive.

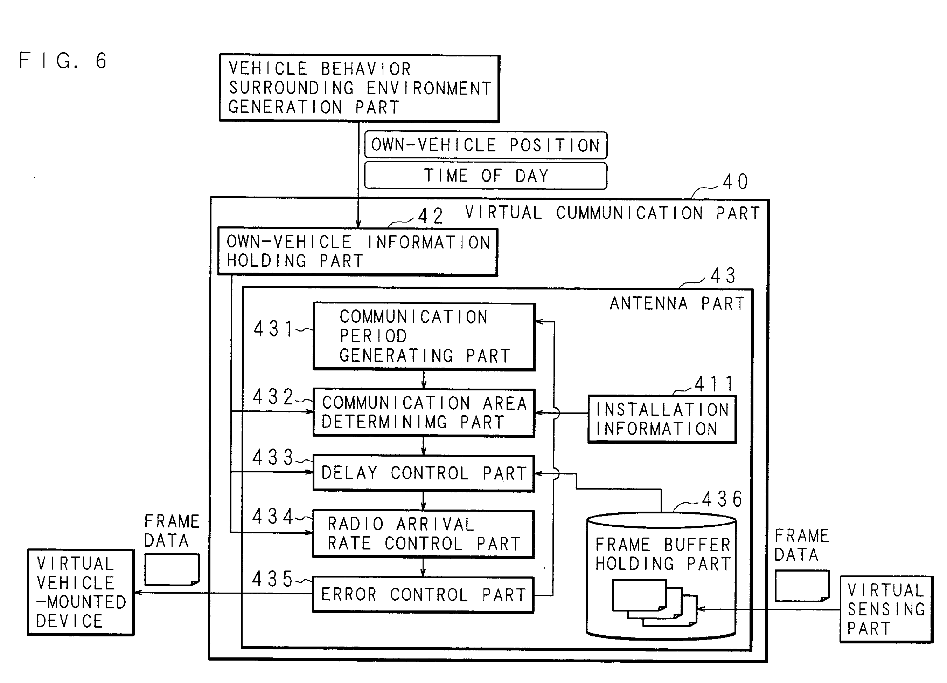

FIG. 6 is a block diagram illustrating an example of the virtual communication part 40. The virtual communication part 40 includes an own-vehicle information holding part 42 and an antenna part 43. The antenna part 43 includes a communication period generating part 431, a communication area determination part 432, a delay control part 433, a radio arrival rate control part 434, an error control part 435, a frame buffer holding part 436, and installation information 411 set up by the communication parameter setting part 41.

The own-vehicle information holding part 42 temporarily holds the own-vehicle information (e.g., the position, the direction, and the speed) and the environmental information such as the time of day inputted from the vehicle behavior surrounding environment generating part 90. Here, when new information is inputted, the information held in the own-vehicle information holding part 42 is updated.

The communication period generating part 431 generates a communication period signal for determining the processing time per cycle of the processing in the antenna part 43. Here, the communication period may agree with the frame rate, or alternatively may be different from the frame rate.

The frame buffer holding part 436 holds the frame data inputted from the virtual sensing part 20, in the form of a time series.

The communication area determination part 432 acquires the own-vehicle information held in the own-vehicle information holding part 42 and refers to the installation information 411 (e.g., the antenna position, the directivity, and the area distance) so as to determine whether the own vehicle is located within the communication area and hence communication is available. When the own vehicle is not located within the communication available area (the location is outside the reach), the communication area determination part 432 stops the processing performed by the delay control part 433 and the subsequent parts in the antenna part 43. In contrast, when the own vehicle is located within the communication available area (the location is within the reach), the communication area determination part 432 outputs a signal for causing the delay control part 433 to execute the processing.

When the frame data is to be transmitted by wireless communication, the delay control part 433 simulates, for example, a time delay from the time point of generation of frame data to the time point of receiving in the vehicle-mounted apparatus. More specifically, for example, when a communication delay time of 200 ms is to be simulated, the delay control part 433 acquires the time of day held in the own-vehicle information holding part 42, then compares the acquired time of day with the time of day of the frame data held in the frame buffer holding part 436, then extracts frame data older than the time of day of the own-vehicle information holding part 42 by 200 ms, and then outputs the extracted frame data to the radio arrival rate control part 434.

The radio arrival rate control part 434 simulates the arrival rate of radio waves (radio arrival rate) for the own vehicle in wireless communication. For example, it is assumed that the antenna directivity is uniform over the 360 degrees and that the radio arrival rate around the antenna installation position decreases depending on the distance from the center. The radio arrival rate control part 434 acquires the position of the own vehicle from the own-vehicle information holding part 42, then refers to the installation information 411 so as to acquire the antenna installation position, then calculates the distance between those positions, then calculates the radio arrival rate corresponding to the calculated distance, and then determines whether the radio waves reach the vehicle-mounted apparatus. When it is determined that the radio waves reach the vehicle-mounted apparatus, the radio arrival rate control part 434 outputs the frame data to the error control part 435. Details of the calculation method for the radio arrival rate are described later.

When the frame data is received by the vehicle-mounted apparatus, the error control part 435 simulates errors contained in the frame data. More specifically, the error control part 435 adds to the frame data an error flag corresponding to the error rate, and then outputs to the virtual vehicle-mounted device 60 the frame data obtained by adding the error flag. When the frame data is to be transmitted, it is assumed that the errors are generated by the unit of packet (e.g., the amount of data in one packet is 512 bytes) which is the smallest unit of communication data. Thus, random numbers are generated in the number of packets. Then, when a random number value below the error rate is generated, an error flag is added to the frame data. Details of the method of adding an error flag are described later.

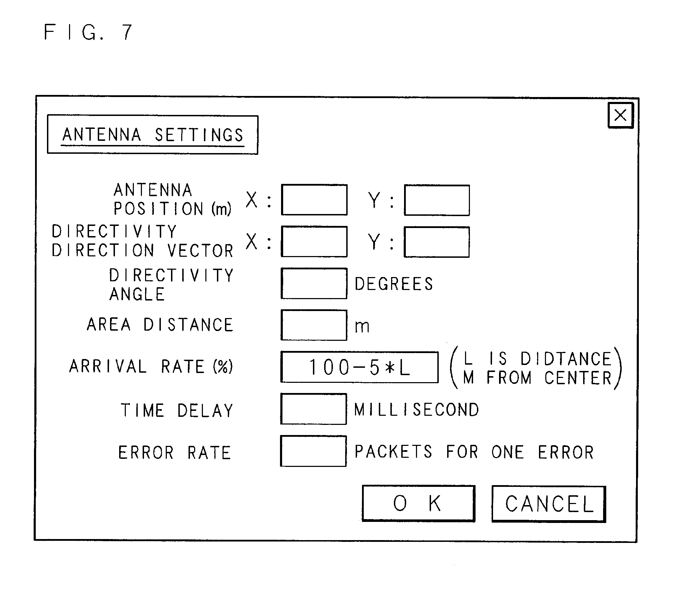

FIG. 7 is an explanation diagram illustrating an example of communication parameter setting. As illustrated in FIG. 7, communication parameters that are up include the antenna position, the directivity direction vector, the directivity angle, the area distance, the radio arrival rate, the time delay, and the error rate. Here, this example of communication parameter setting is exemplary and not restrictive.

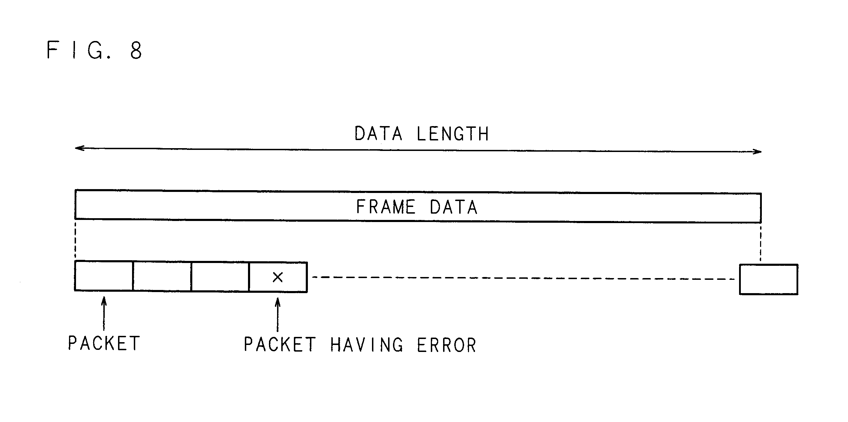

FIG. 8 is an explanation diagram illustrating an example of error control. As illustrated in FIG. 8, one frame data is divided into a plurality of packets (e.g., the amount of data of one packet is 512 bytes). For example, it is assumed that the error rate is one per 10000 packets. Then, the number of packets necessary for transmitting one frame data is calculated. Then, random numbers (e.g., within a range from 1 to 10000) are generated in the number of times equal to the calculated number of packets. Then, when a random number value of "1" is generated, it is regarded that an error occurs in the frame data so that an error flag is added. Here, the error rate may be changed depending on the distance from the position where the antenna is installed.

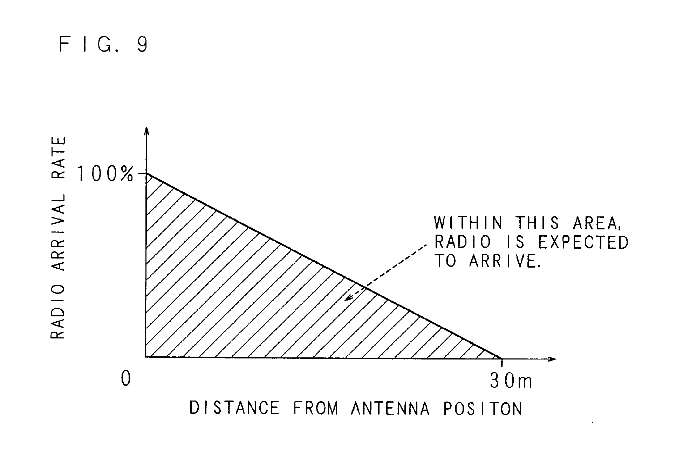

FIG. 9 is an explanation diagram illustrating an example of the radio arrival rate. As illustrated in FIG. 9, the horizontal axis represents the distance from the antenna position, while the vertical axis represents the radio arrival rate. When the horizontal axis is denoted by x and the vertical axis is denoted by r, the formula of a straight line that represents the radio arrival rate is expressed, for example, by r=100-(10/3)x. That is, the radio arrival rate is 100% at the antenna position, and decreases with increasing distance from the antenna position. The arrival rate becomes 50% at a position whose distance from the antenna position is 15 m, and becomes 0% at a position whose distance from the antenna position is 30 m. In this case, in the processing performed by the radio arrival rate control part 434, for example, random numbers (within a range from 0 to 100) are generated, and then when a generated random number value falls below the straight line that represents the radio arrival rate, it is determined that the radio waves reach. Here, the radio arrival rate can be simulated also in a more complicated situation.

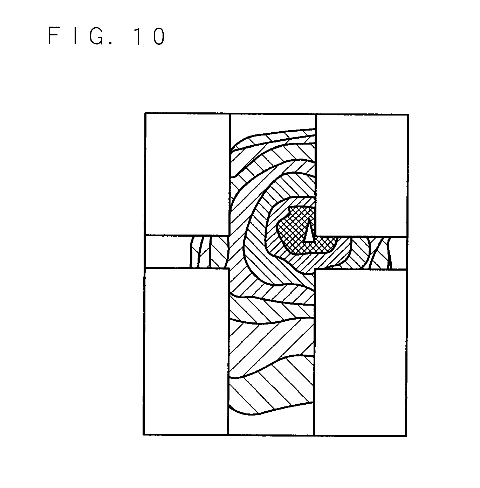

FIG. 10 is an explanation diagram illustrating an example of distribution of radio arrival situation. As illustrated in FIG. 10, in the actual place of installation of the antenna (a triangle in the figure) near a crossing, buildings are present in the vicinity. Thus, the radio waves outputted from the antenna are reflected in the buildings. This causes a complicated change in the radio arrival situation (i.e., the intensity and the receiving sensitivity of radio waves). In such a situation, calculation of the radio arrival rate in real time is difficult. Thus, map data of the radio arrival rate calculated or measured in advance may be held.

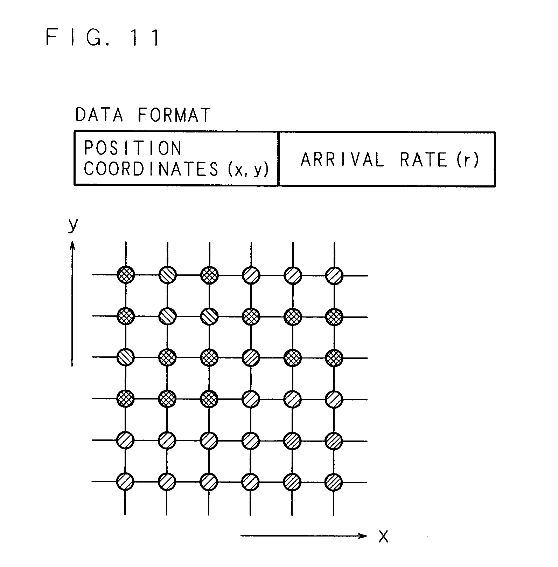

FIG. 11 is an explanation diagram illustrating a data format for radio arrival rate. As illustrated in FIG. 11, the data format is constructed as a combination of position coordinates (x,y) and an arrival rate r. The position coordinates (x,y) indicate, for example, coordinates on a plane that contains the antenna position. The arrival rate r indicates a value at a given height (e.g., 1m or 2m which is approximately equal to the height of a vehicle) at the position coordinates. When the radio arrival rate is treated as varying depending on the position in three-dimensional space, more accurate values are obtained. Nevertheless, when three-dimensional space is taken into consideration, the amount of information becomes huge. Thus, values at the given height are adopted so that satisfactory approximation is achieved without the necessity of huge amount of processing.

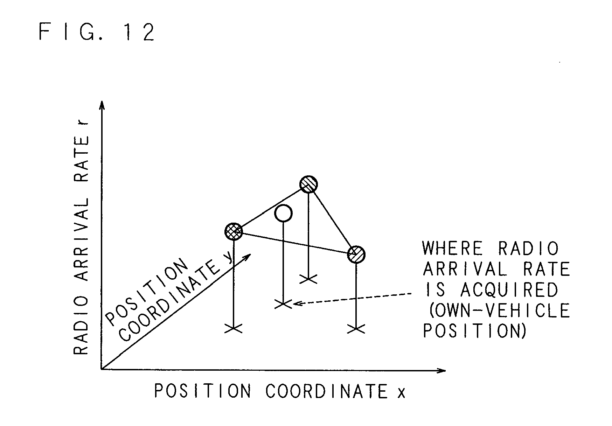

FIG. 12 is an explanation diagram illustrating an example of an interpolation method for the radio arrival rate. FIG. 12 illustrates an example of a method of interpolating the radio arrival rate at a position other than the position coordinates registered in the map data illustrated in FIG. 11. As illustrated in FIG. 12, coordinate space is constructed from the position coordinates (x,y) and the radio arrival rate r. Then, three points (shaded circles in the figure) are searched for that are closest to the position coordinates (an open circle in the figure) where the radio arrival rate is to be calculated. The obtained position coordinates of the three points are denoted by (x1,y1), (x2,y2), and (x3,y3), respectively. Further, the radio arrival rates at the individual position coordinates are denoted by r1, r2, and r3, respectively. Then, the radio arrival rate r at the position coordinates (x,y) is calculated by Formula (1).

[Formula 1]

$$r = \frac{\{(y2-y1)(r3-r1)-(y3-y1)(r2-r1)\}(x-x1)+\{(r2-r1)(x3-x1)-(r3-r1)(x2-x1)\}(y-y1)}{\{(x3-x1)(y2-y1)-(x2-x1)(y3-y1)\}} + r1$$

$$\cdots (1)$$

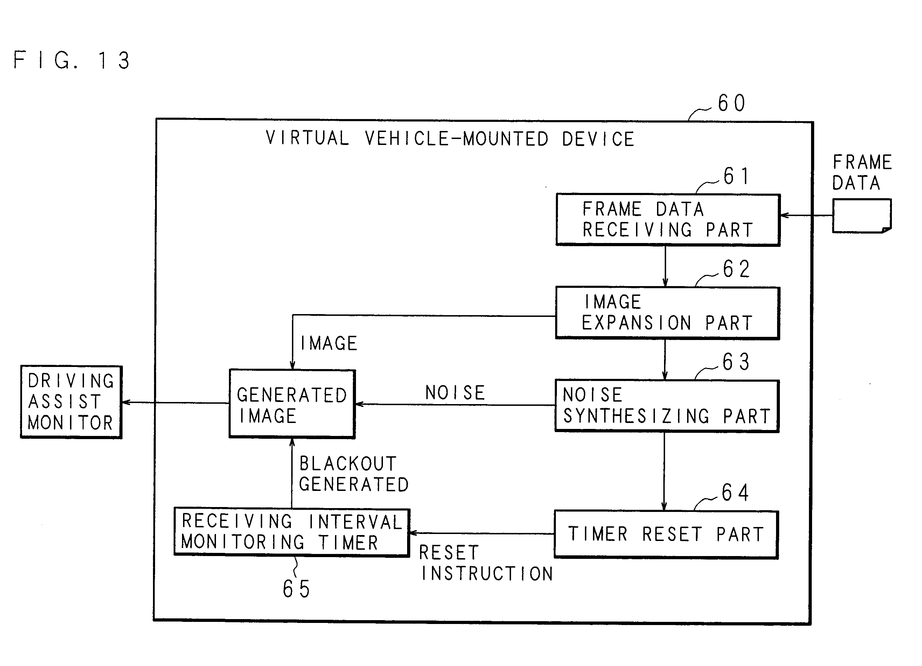

FIG. 13 is a block diagram illustrating an example of the virtual vehicle-mounted device 60. The virtual vehicle-mounted device 60 virtually realizes an actual vehicle-mounted apparatus, and includes a frame data receiving part 61, an image expansion part 62, a noise synthesizing part 63, a timer reset part 64, and a receiving interval monitoring timer 65.

The frame data receiving part 61 acquires the frame data inputted from the virtual communication part 40, and then outputs the acquired frame data to the image expansion part 62.

The image expansion part 62 expands (extends) the data compressed by a given compression method, and thereby generates (restores) an image of one screen.

The noise synthesizing part 63 checks the error flag added in the frame data. Then, when the frame data contains an error, the noise synthesizing part 63 superposes noise onto the image expanded by the image expansion part 62, and thereby generates an image containing noise.

The timer reset part 64 outputs a reset instruction to the receiving interval monitoring timer 65 at each time that frame data is acquired in the frame data receiving part 61.

The receiving interval monitoring timer 65 is a countdown timer of 0.1 second, 0.2 second, or the like, and counts down at each time that a reset instruction is inputted from the timer reset part 64. Then, when the count reaches 0 second, the receiving interval monitoring timer 65 generates a blackout. As a result, when the image expanded by the image expansion part 62 is displayed on the driving assist monitor 14, for example, a dark screen is displayed.

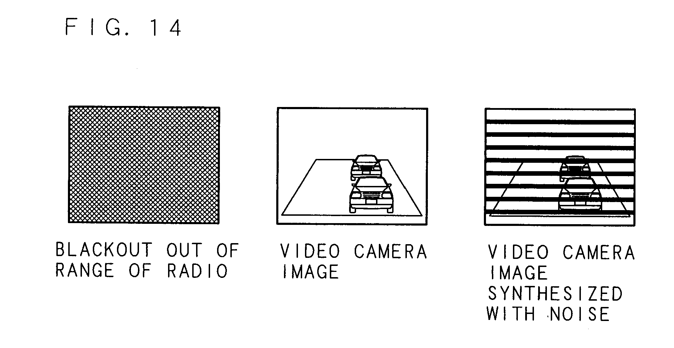

FIG. 14 is an explanation diagram illustrating an example of an image displayed on the driving assist monitor 14. As illustrated in FIG. 14, in the driving simulation evaluation apparatus 100, when a situation is simulated that radio waves do not reach and hence frame data is not transmitted to the vehicle-mounted apparatus, the driving assist monitor 14 is in blackout (e.g., the entire screen is dark). In contrast, when a situation is simulated that frame data is normally transmitted to the vehicle-mounted apparatus, the driving assist monitor 14 displays the generated image. Further, when a situation is simulated that an error has occurred during the transmission of frame data, the driving assist monitor 14 displays an image obtained by superimposing noise (e.g., horizontal stripes) on the generated image.

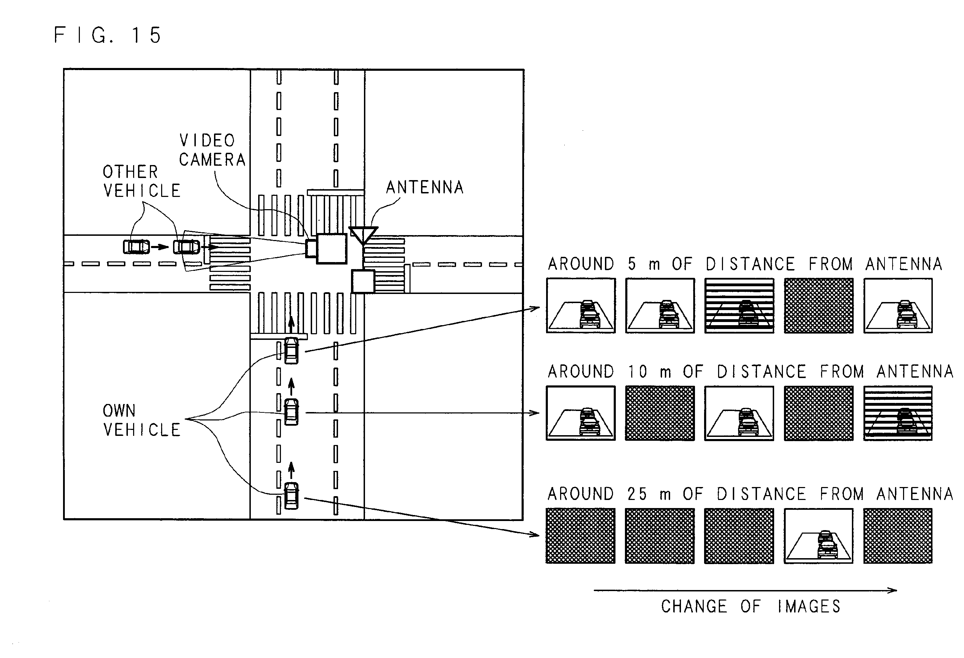

FIG. 15 is an explanation diagram illustrating an example of display of the driving assist monitor 14. As illustrated in FIG. 15, the driving simulation evaluation apparatus 100 can simulate (perform driving simulation) a situation that a video camera and an antenna for taking a video of vehicles (other vehicles) running toward a crossing on a road that crosses with another one at the crossing are installed near the crossing, and that the video taken by the video camera is transmitted through the antenna to the own vehicle running toward the crossing on the other road. Thus, a situation can be simulated that the radio arrival rate from the antenna is improved as the position of the own vehicle approaches the crossing. For example, as for a change in the image (video) displayed on the driving assist monitor 14, in comparison with a case that the position of the own vehicle is 25 m or the like from the antenna, blackout is reduced and hence the display becomes satisfactory in a case of 5 m or the like from the antenna.

The example illustrated in FIG. 15 is exemplary. That is, a video displayed on the driving assist monitor 14 is not limited to this. When driving is simulated with changing the sensor parameters, the communication parameters, and the like, the situation of providing of driving assist service in various sensing situations and communication situations can be evaluated. The video displayed on the driving assist monitor 14 permits real-time evaluation of, for example, whether the video is displayed satisfactory, or alternatively whether information necessary for safe driving by a driver is reliably provided when the displayed video is watched. Here, the point where driving simulation is to be evaluated is not limited to one place. That is, evaluation may be performed in a plurality of points.

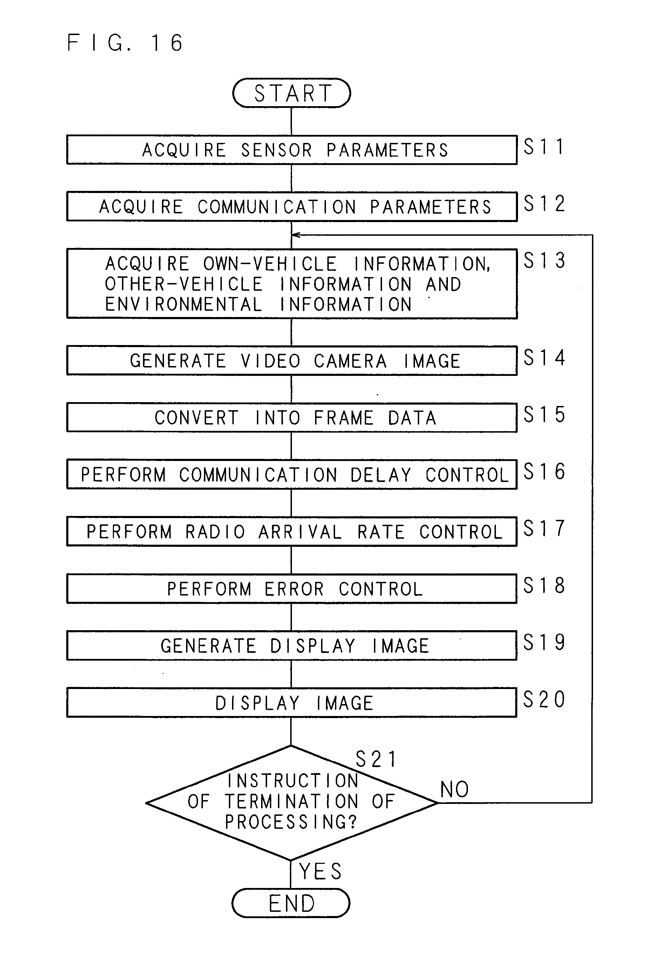

Next, the operation of the driving simulation evaluation apparatus 100 is described below. FIG. 16 is a flow chart illustrating a processing procedure of driving simulation evaluation. Here, in addition to execution by a dedicated hardware circuit, the driving simulation evaluation processing may be performed by a method in which a program code that defines a procedure of driving simulation evaluation processing is loaded onto a RAM and then executed by a CPU (both are not illustrated). The following description of the flow chart is given for a case that the individual parts of the driving simulation evaluation apparatus 100 are implemented by a CPU.

The CPU acquires the sensor parameters (S11), and then acquires the communication parameters (S12). The CPU acquires the own-vehicle information, the other-vehicle information, and the environmental information (S13), and then generates a video camera image on the basis of the acquired information, the accuracy map, and the like (S 14). The CPU converts the data of the image into frame data (S15), and then performs communication delay control in which the communicative time delay is taken into consideration on the basis of the acquired communication parameters (S16).

On the basis of the acquired communication parameters, the communication situation map, and the like, the CPU calculates the radio arrival rate, then determines whether the radio waves arrive, and then performs radio arrival rate control (S17). On the basis of the acquired communication parameters, the CPU performs error control in which the occurrence or non-occurrence of an error is simulated (S18). In accordance with the results of the radio arrival rate control and the error control, the CPU generates a display image to be displayed on the driving assist monitor 14 (S19), and then displays the image (S20).

The CPU determines the presence or absence of an instruction of termination of the processing (S21). Then, in case of absence of an instruction of termination of the processing (NO at S21), the CPU continues the processing at step S13 and the subsequent steps, that is, for example; continues the processing of simulating and evaluating the situation at another point. In case of presence of an instruction of termination of the processing (YES at S21), the CPU terminates the processing.

Embodiment 2

In Embodiment 1, the number of sensors (video cameras) virtually realized by the virtual sensing part 20 has been unity, and the number of antennas virtually realized by the virtual communication part 40 has been unity. However, the number of sensors and the number of antennas are not limited to unity. That is, a plurality of them may also be realized virtually.

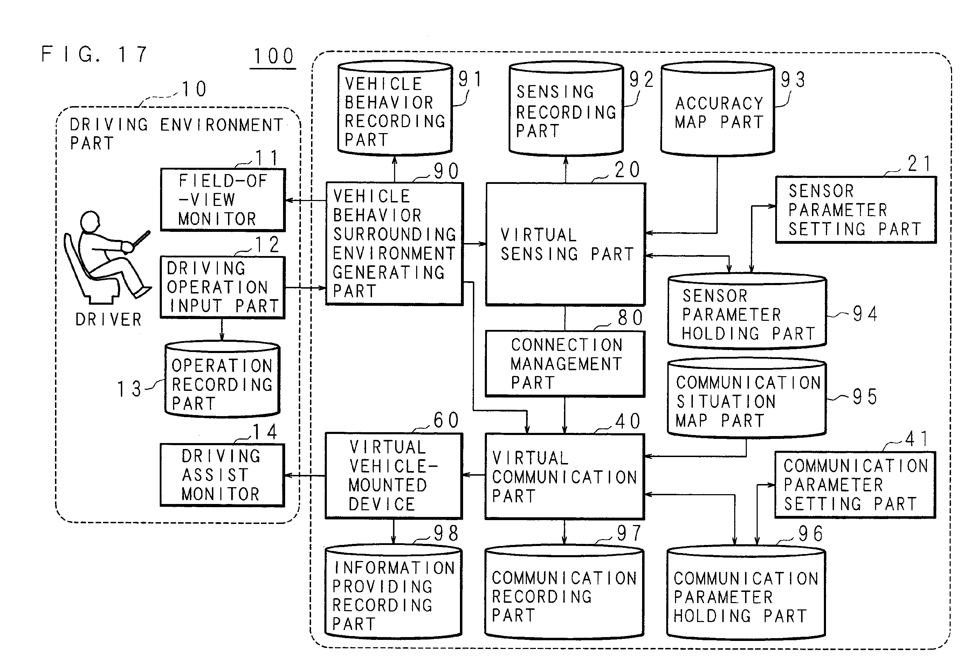

FIG. 17 is a block diagram illustrating an example of a driving simulation evaluation apparatus 100 according to Embodiment 2. The differences from Embodiment 1 are that a connection management part 80 is provided between the virtual sensing part 20 and the virtual communication part 40 and that the number of sensors virtually realized by the virtual sensing part 20 is, for example, two. The connection management part 80 simulates the connection situation between the virtual sensing part 20 and the virtual communication part 40. Details of the connection management part 80 are described later.

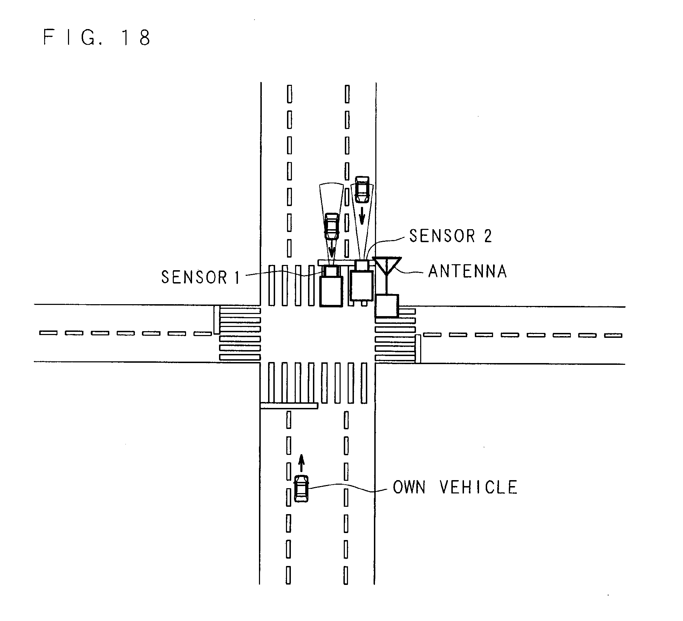

FIG. 18 is an explanation diagram illustrating an example of a driving simulation situation. FIG. 18 illustrates an example of a situation of driving simulated by the driving simulation evaluation apparatus 100 according to Embodiment 2. As illustrated in FIG. 18, in the driving simulation evaluation apparatus 100, sensors (e.g., ultrasonic sensors) 1 and 2 and an antenna for sensing a vehicle (other vehicle) running toward a crossing on one road that intersects the crossing are installed near the crossing. This permits simulation (driving simulation) of a situation that signals detected by the sensors 1 and 2 are transmitted through the antenna to the own vehicle that runs on the other road.

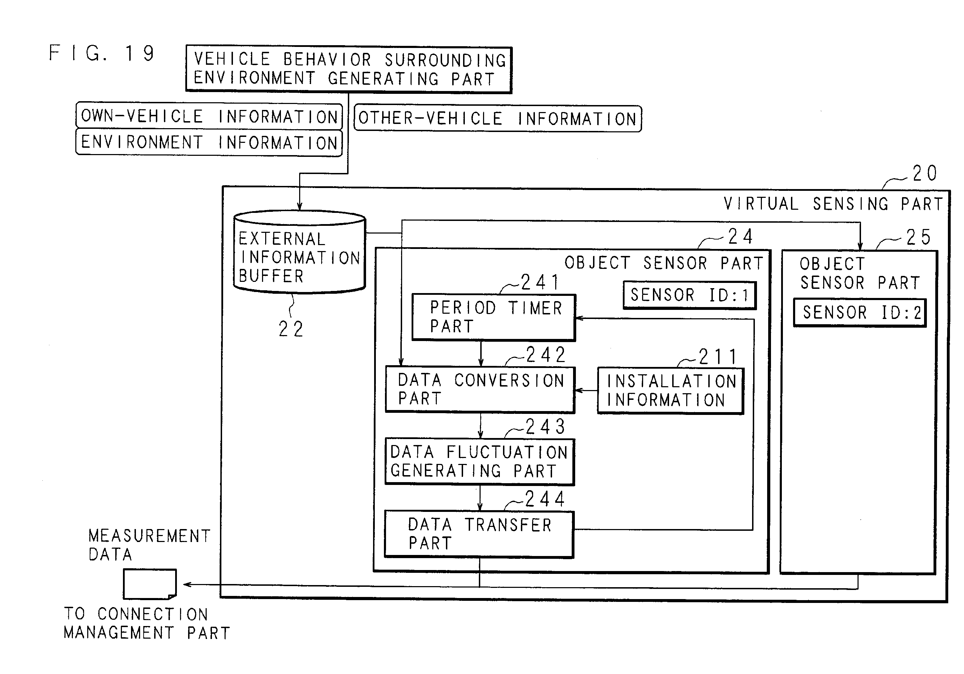

FIG. 19 is a block diagram illustrating an example of the virtual sensing part 20. The virtual sensing part 20 includes an external information buffer 22 and object sensor parts 24 and 25. The object sensor part 24 includes a period timer part 241, a data conversion part 242, a data fluctuation generating part 243, a data transfer part 244, and installation information 211 set up by the sensor parameter setting part 21. Here, the object sensor part 25 has a configuration similar to that of the object sensor part 24. Hence, description is omitted.

The data conversion part 242 acquires the other-vehicle information held in the external information buffer 22 and refers to the installation information (e.g., the sensor position, the lane area of the road, and the crossing position) 211 so as to calculate as measurement data the sensing information (e.g., the width w of an other vehicle, the length d of an other vehicle, the speed v, and the distance L to the crossing) detected by the sensor. The method of calculating the measurement data is described later.

The data fluctuation generating part 243 simulates the measurement data calculated by the data conversion part 242, with taking into consideration the sensing accuracy resulting from the error of the sensor, the geographical features around the crossing, the shapes of the buildings around the crossing, and the like. More specifically, the data fluctuation generating part 243 provides a necessary fluctuation in the measurement data. For example, when a fluctuation width of 10% is adopted, a random number R (within a range from -0.1 to 0.1) is generated for the width w of an other vehicle. Then, the width w' of this other vehicle including a fluctuation is calculated as $w' = w \times (1+R)$. A similar method is used for the other measurement data.

The data transfer part 244 outputs the measurement data to the connection management part 80. The external information buffer 22 and the period timer part 241 are similar to those of Embodiment 1. Hence, description is omitted.

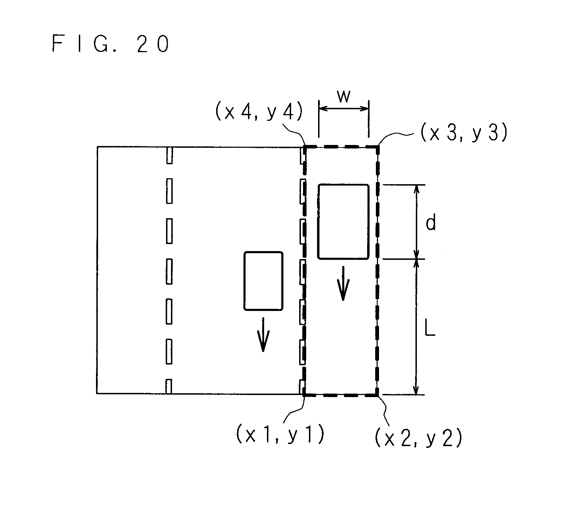

FIG. 20 is an explanation diagram illustrating a measurement data calculation method in the data conversion part 242. As illustrated in FIG. 20, a lane range serving as the detection range for other vehicles is defined in advance by the coordinates (x1,y1), (x2,y2), (x3,y3), and (x4,y4) of the vertices of a square. Further, a straight line that joins the two points (x1,y1) and (x2,y2) is defined as being located adjacent to the crossing. As the other-vehicle information, the position (x,y), the size (the width w and the length d), and the speed v are acquired from the external information buffer 22. Then, from the acquired position (x,y) of this other vehicle, an other vehicle located within the area of the lane is identified.

When a plurality of other vehicles are located within the area of the lane, an other vehicle nearest to the crossing is identified. Then, the distance L to this other vehicle is calculated on the basis of the position (x,y) of this other vehicle and the position (x1,y1) and (x2,y2) of the crossing. Here, when a plurality of other vehicles are located within the area of the lane, the measurement data of other vehicles may also be calculated.

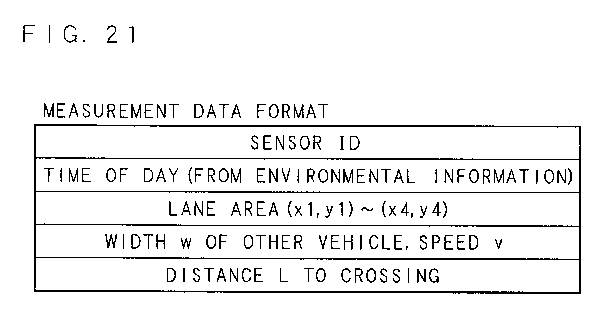

FIG. 21 is an explanation diagram illustrating a measurement data format. As illustrated in FIG. 21, The measurement data format includes the sensor ID, the time of day, the lane area, the width w of another vehicle, the speed v, and the distance L to the crossing. Here, this measurement data format is exemplary and not restrictive.

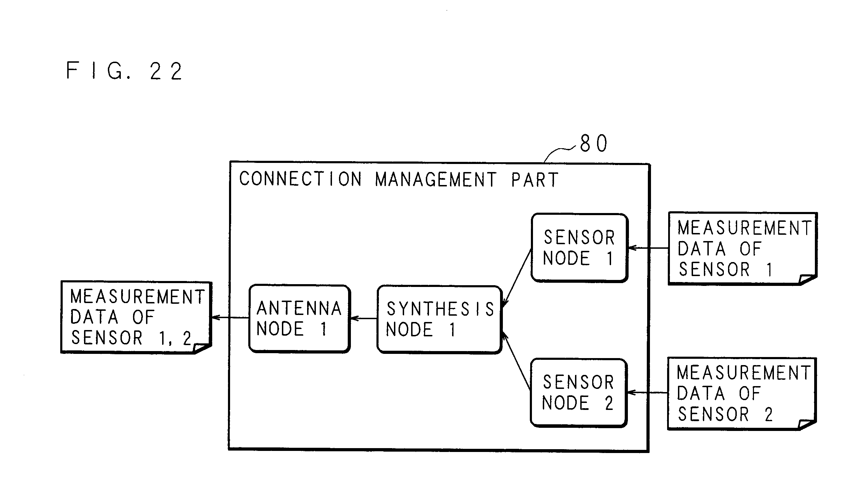

FIG. 22 is an explanation diagram illustrating an example of a connection situation in the connection management part 80. The connection management part 80 holds the connecting relation between the sensors and the antenna as a connecting relation between nodes. The connection management part 80 includes: a sensor node 1 serving as an input source of the measurement data of the sensor 1; a sensor node 2 serving as an input source of the measurement data of the sensor 2; a synthesis node 1 serving as an output destination of the sensor nodes; and an antenna node 1 serving as an output destination of the synthesis node 1.

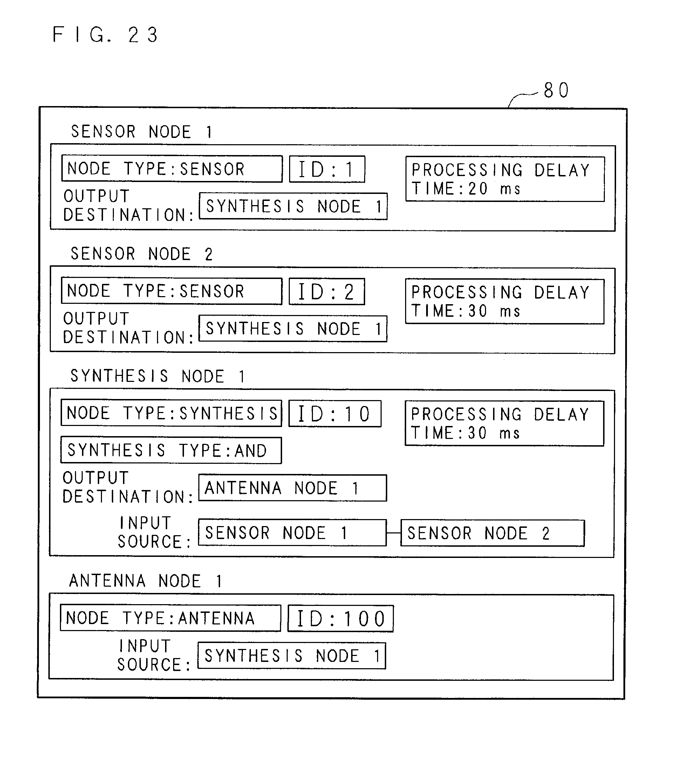

FIG. 23 is an explanation diagram illustrating a data structure in the connection management part 80. As illustrated in FIG. 23, the sensor node 1 has the data of node type, sensor ID, processing delay time, output destination node, and the like. Further, the synthesis node 1 has the data of node type, synthesis node ID. processing delay time, synthesis type (AND or OR), output destination, input source, and the like. Further, the antenna node 1 has the data of node type, antenna node ID, input source, and the like.

When measurement data is acquired from the virtual sensing part 20, the connection management part 80 searches the individual nodes for a sensor node whose node type is sensor and whose sensor ID is equal to the sensor ID in the measurement data. When a sensor node is found, the connection management part 80 acquires an output destination node in the output destination list, and then outputs the measurement data and the processing delay time to each output destination node. The processing delay time indicates processing time necessary in sensing in the sensor.

Since the output destination of the sensor node 1 is the synthesis node 1, the connection management part 80 outputs the measurement data and the processing delay time (20 ms) to the synthesis node 1. Further, since the output destination of the sensor node 2 is the synthesis node 1, the connection management part 80 outputs the measurement data and the processing delay time (30 ms) to the synthesis node 1.

The synthesis node 1 has a synthesis type of AND, and hence waits with stopping output to the output destination until measurement data arrives from all input source nodes. When measurement data and processing delay time have arrived from all input source nodes, the connection management part 80 compares time-of-day values each obtained by adding the processing delay time to the time of day of the measurement data, thereby selects one having the greatest value, that is, one having arrived latest, so as to adopt this value as new measurement time of day, and then generates measurement data obtained by combining the individual measurement data. In this case, the processing delay time (30 ms) of the sensor node 2 and the processing delay time (30 ms) of the synthesis node 1 are added. Here, when the synthesis type is OR, output to the output destination is performed at the time that measurement data arrives from an input source node. Whether the synthesis type should be AND or OR can be set up appropriately.

The connection management part 80 outputs the synthetic measurement data and the processing delay time in the synthesis node to the antenna node 1. Here, when a plurality of nodes are listed in the output destination list, output is performed to each node. The antenna node 1 adds the processing delay time to the measurement time of day of the inputted synthetic measurement data, and then outputs the data together with the antenna ID to the virtual communication part 40.

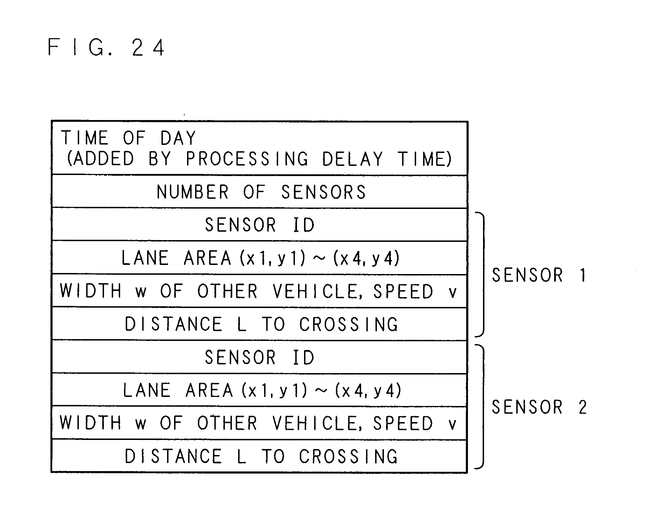

FIG. 24 is an explanation diagram illustrating a measurement data format synthesized by the synthesis node. As illustrated in FIG. 24, The synthesized measurement data includes the time of day, the number of sensors, and the measurement data of individual sensors.

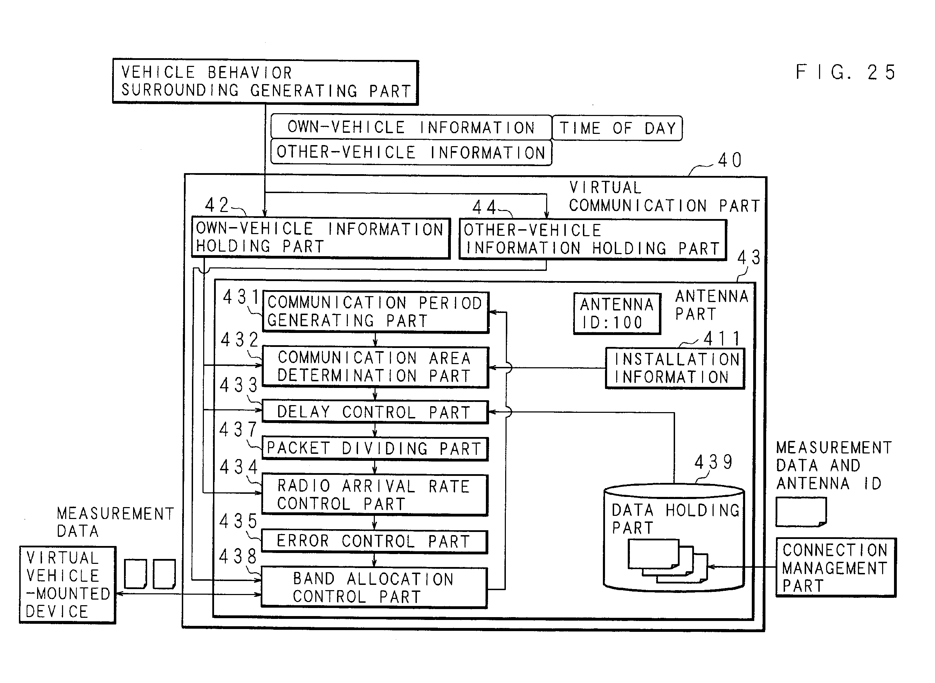

FIG. 25 is a block diagram illustrating an example of the virtual communication part 40. The virtual communication part 40 includes an own-vehicle information holding part 42, an other-vehicle information holding part 44, and an antenna part 43. The antenna part 43 includes a communication period generating part 431, a communication area determination part 432, a delay control part 433, a packet dividing part 437, a radio arrival rate control part 434, an error control part 435, a band allocation control part 438, a data holding part 439, and installation information 411 set up by the communication parameter setting part 41.

The virtual communication part 40 acquires the measurement data and the antenna ID inputted from the connection management part 80, and then holds the measurement data in the data holding part 439 of the antenna part 43 having the same antenna ID as the acquired antenna ID.

The packet dividing part 437 divides into packets the measurement data held in the data holding part 439.

The band allocation control part 438 simulates a situation that a plurality of other vehicles perform communication through the antenna. The band allocation control part 438 acquires other-vehicle information from the other-vehicle information holding part 44, and refers to the installation information 411 so as to determine whether another vehicle is located within the communication area of the antenna, and then counts the number of other vehicles located within the communication area. The band allocation control part 438 divides the communication band on the basis of a number obtained by adding the own vehicle to the counted number. As a result, the band allocation control part 438 simulates a situation that the number of packets that can successively be transmitted to the vehicle-mounted apparatuses is limited.

The band allocation control part 438 holds a packet that was not able to be transmitted, in a buffer (not illustrated) of the band allocation control part 438. Then, at the time that the next communication period signal is generated in the communication period generating part 431, the packet having been held is outputted to the virtual vehicle-mounted device 60. The band allocation control part 438 does not output a new packet generated at the time that the new communication period signal is generated, and instead outputs the old packet having been held. As a result, the band allocation control part 438 can simulate a case that the band is limited.

Here, the communication period generating part 431, the communication area determination part 432, the delay control part 433, the radio arrival rate control part 434, and the error control part 435 are similar to those of Embodiment 1. Hence, description is omitted.

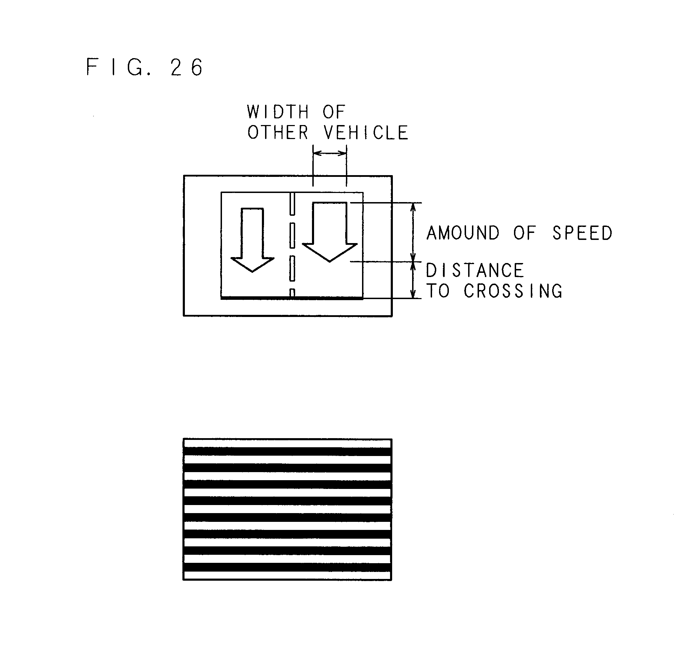

FIG. 26 is an explanation diagram illustrating an example of an image displayed on the driving assist monitor 14. The virtual vehicle-mounted device 60 receives data from the virtual communication part 40 on a packet basis, and then combines the received data so as to restore the original measurement data. As illustrated in FIG. 26, in the image displayed on the driving assist monitor 14, for example, an arrow represents an other vehicle. Then, the width of the arrow represents the width w of this other vehicle, the size of the arrow represents the speed of this other vehicle, and the length to the head of the arrow represents the distance of this other vehicle to the crossing. This display example is not restrictive.

When an error is contained in the received packet, or alternatively when non-arrival of a packet is detected, the virtual vehicle-mounted device 60 concludes the presence of an error in the received measurement data. In this case, an image, for example, with horizontal stripes is displayed on the driving assist monitor 14.

Embodiment 3

Embodiment 3 is a mode of simulation of intervention control in which automatic driving such as danger avoidance is performed in accordance with the situation in Embodiment 2.

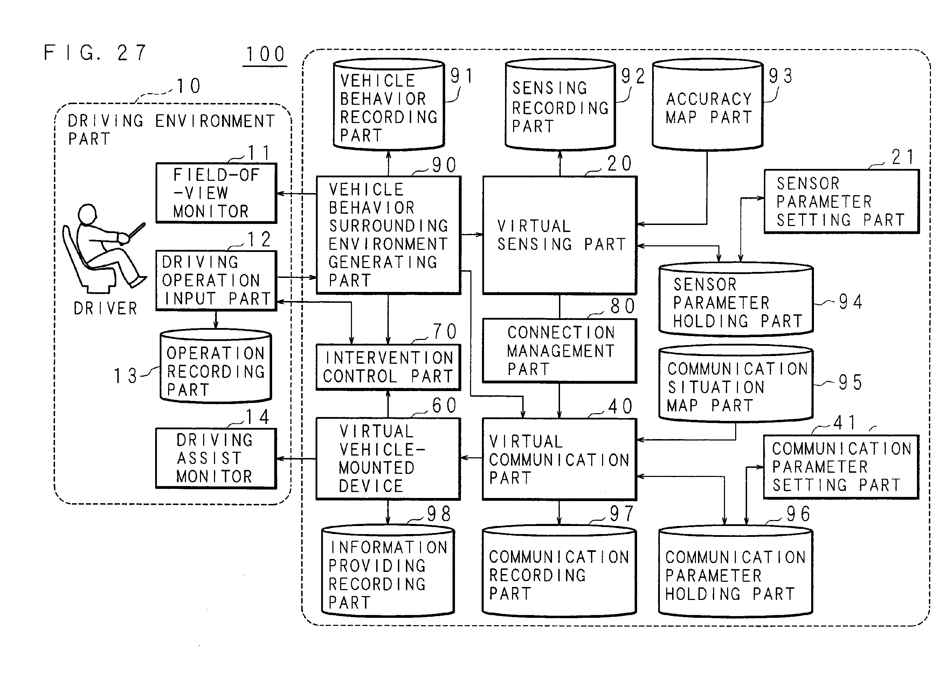

FIG. 27 is a block diagram illustrating an example of a driving simulation evaluation apparatus 100 according to Embodiment 3 of the present technique. The difference from Embodiment 2 is that an intervention control part 70 is provided that is connected to the virtual vehicle-mounted device 60, the vehicle behavior surrounding environment generating part 90, and the driving operation input part 12. The intervention control part 70 is described later. Here, like configurations to Embodiment 1 or 2 are denoted by like numerals to Embodiment 1 or 2. Thus, Embodiment 1 or 2 shall be referred to for their description, and duplicated description is omitted here. The example of driving simulation situation assumed in Embodiment 3 is the same as the situation of driving simulation described with reference to FIG. 18 in Embodiment 2.

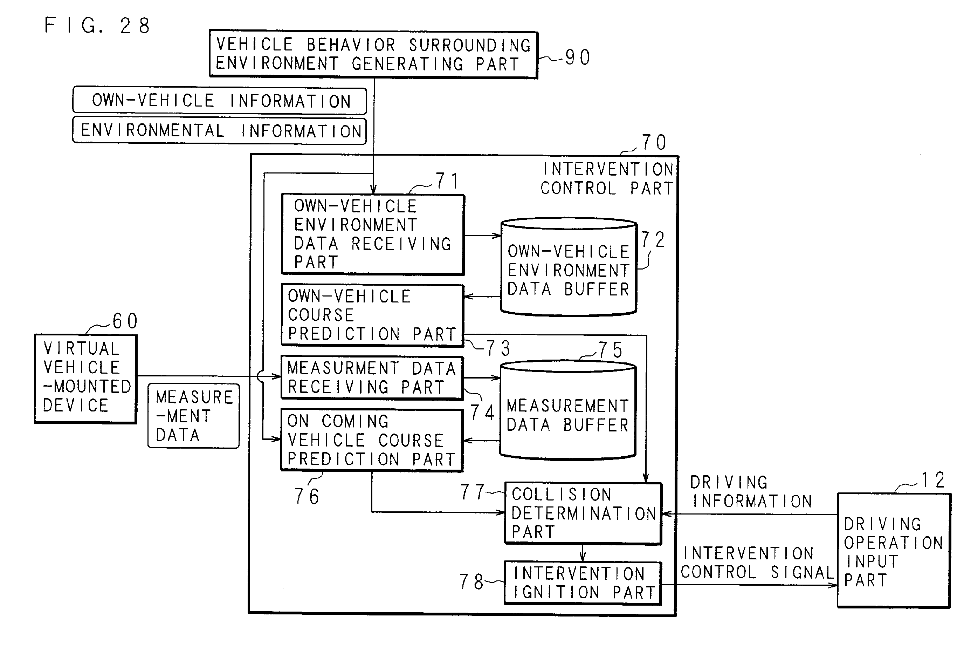

FIG. 28 is a block diagram illustrating an example of the intervention control part 70. The vehicle behavior surrounding environment generating part 90 outputs to the intervention control part 70: own-vehicle information such as the coordinates and the velocity vector of the driven vehicle; and environmental information such as the crossing center position relative to the running position of the driven vehicle, and the time of day. Further, the virtual vehicle-mounted device 60 outputs, to the intervention control part 70, information concerning a detection-simulated other vehicle like the measurement data such as the speed of this other vehicle, the distance to the crossing, and the lane area. The intervention control part 70 includes an own-vehicle environment data receiving part 71, an own-vehicle environment data buffer 72, an own-vehicle course prediction part 73, a measurement data receiving part 74, a measurement data buffer 75, an oncoming vehicle course prediction part 76, the collision determination part 77, and an intervention ignition part 78.

The own-vehicle environment data receiving part 71 acquires the own-vehicle information and the environmental information outputted from the vehicle behavior surrounding environment generating part 90, and then saves into the own-vehicle environment data buffer 72 the own-vehicle information and the environmental information having been acquired.

The own-vehicle course prediction part 73 acquires the own-vehicle information and the environmental information saved in the own-vehicle environment data buffer 72. Then, on the basis of the own-vehicle information and the environmental information having been acquired, that is, on the basis of the information such as the coordinates of the driven vehicle, the velocity vector, the crossing center position, and the time of day, the own-vehicle course prediction part 73 calculates own-vehicle course prediction information such as the time of day when the own vehicle approaches closest to the center of the crossing. In the calculation of the own-vehicle course prediction information, accuracy can be improved, for example, by referring to data of past simulation tests. Then, the own-vehicle course prediction part 73 outputs the calculated own-vehicle course prediction information to the collision determination part 77.

The measurement data receiving part 74 acquires the measurement data outputted from the virtual vehicle-mounted device 60, and then saves the acquired measurement data into the measurement data buffer 75.

The oncoming vehicle course prediction part 76 acquires the measurement data saved in the measurement data buffer 75, and further acquires the environmental information outputted from the vehicle behavior surrounding environment generating part 90, Then, on the basis of information concerning other vehicles like such as the speed of an other vehicle, the distance to the crossing, and the lane area contained in the measurement data, as well as information such as the crossing center position contained in the environmental information, the oncoming vehicle course prediction part 76 calculates other-vehicle course prediction information such as the time of day and that an other vehicle approaches closest to the center of the crossing. In the calculation of the other-vehicle course prediction information, accuracy can be improved, for example, by referring to data of past simulation tests. Then, the oncoming vehicle course prediction part 76 outputs the calculated other-vehicle course prediction information to the collision determination part 77.

The collision determination part 77 acquires the own-vehicle course prediction information and the other-vehicle course prediction information from the own-vehicle course prediction part 73 and the oncoming vehicle course prediction part 76, and acquires driving information such as information representing operation on the blinkers of the driven vehicle from the driving operation input part 12. On the basis of the own-vehicle course prediction information, the other-vehicle course prediction information, and the driving information having been acquired, the collision determination part 77 determines the necessity or non-necessity of intervention operation. For example, in a case that the driving information indicates that the driven vehicle is turning to the right, when the difference between the time of day when the driven vehicle approaches closest to the crossing center which is calculated from the own-vehicle course prediction information and the time of day when an other vehicle approaches the crossing center to the crossing center which is calculated from the other-vehicle course prediction information falls within a given time period such as 2 seconds set up appropriately, collision will occur, and hence it is determined that intervention operation is necessary. Further, various information such as the size of the vehicle, the speed of the vehicle, and accelerator and brake operation may be taken into consideration. Then, the time of day of passing the crossing center position may be calculated, and the time period of staying near the crossing center may be calculated on the basis of past data. Then, with taking these into consideration, the accuracy of collision determination can be improved. When it is determined that intervention operation is necessary, the collision determination part 77 outputs, to the intervention ignition part 78, information for intervention operation for avoidance, that is, intervention operation request information that indicates possible occurrence of collision.

On the basis of the intervention operation request information, the intervention ignition part 78 outputs to the driving operation input part 12 an intervention control signal that indicates intervention operations such as an increase of 5% in the amount of brake operation. The intervention ignition part 78 selects suitable intervention operation on the basis of the relation set up in advance between the to-be-avoided situation indicated by the intervention operation request information and the intervention operation. When setting parameters such as the amount of brake operation and the control of inclination of the steering wheel used in such intervention operation are variable, appropriateness of intervention control can be tested.

The driving operation input part 12 acquires the intervention control signal, then receives as driving operation the intervention operation represented by the acquired intervention control signal, and then performs intervention control such as an increase of 5% in the amount of brake operation. This permits simulation of a situation that the speed of the driven vehicle is reduced so that collision is avoided. Here, the driving operation input part 12 may be provided with a speech synthesis function so that the situation of being under intervention control may be notified to the driver by a speech. Further, the intervention ignition part 78 may output an intervention control signal to the vehicle behavior surrounding environment generating part 90. Then, the vehicle behavior surrounding environment generating part 90 may interpret the intervention control signal so that the situation may be reflected in the generation of the behavior of the driven vehicle.

As described above, in the present technique, an actual sensing situation and an actual wireless communication situation are virtually realized, so that the influence of a change in performance parameters on safe driving can be tested at a low cost in a short period of time. Further, a more complicated configuration can be simulated like a situation that a plurality of sensors are connected to one communication antenna or alternatively a situation that one sensor is connected to a plurality of communication antennas. Furthermore, easy evaluation is achieved for a change in the information concerning traffic circumstance to be provided to the driver caused by a change in the detection condition of the sensor. Further, a complicated situation of detection accuracy of the sensor can be simulated in real time. Further, easy evaluation is achieved for a change in the information concerning traffic circumstance to be provided to the driver caused by a change in the communication condition. Further, a complicated communication situation can be simulated in real time. Further, detailed evaluation is achieved for the influences of a difference in the sensor situation and a difference in the communication situation on the providing of the information concerning the traffic circumstance to the driver. Further, detailed evaluation is achieved for what kind of a different influence is caused by operation by the driver. Thus, a difference in the degree of influence can also be evaluated between a plurality of drivers.

In the above-mentioned embodiments, the setting for the vicinity of the crossing serving as a target of driving simulation is exemplary. That is, the setting may appropriately be changed in accordance with the actual situation of the site. Further, the point adopted as a target of driving simulation is not limited to a place near a crossing. That is, any point may be adopted as a target of simulation as long as safe driving is desired at that point.

As the above-mentioned embodiments, the connection situation in the connection management part is exemplary. That is, a configuration may be adopted that a plurality of sensor nodes are connected to a plurality of antenna nodes.

As the above-mentioned embodiments, a driving assist monitor has been provided separately from a field-of-view monitor. Here, a configuration may be adopted that output from a virtual vehicle-mounted device is displayed in a part of the screen of a field-of-view monitor.

In the above-mentioned embodiments, in the intervention control, appropriate conditions may be set up like the intervention control is performed together with information providing or alternatively in place of information providing.

In the above-mentioned embodiments, in addition to displaying on the driving assist monitor, a speech synthesizer may be provided in the driving assist monitor so that information may be provided to the driver also by speech.

## Claims

1.  A driving simulation evaluation method of generating information concerning traffic circumstance of a road in response to received driving operation, and displaying a video of the traffic circumstance on the basis of the generated information so as to evaluate safety of driving, the method comprising*

    simulating detection of an object on the road on the basis of the generated information;
    simulating a situation of communication of information concerning the detection-simulated object to a vehicle-mounted apparatus; and
    simulating displays of the detection-simulated object in accordance with the simulated communication situation on a display device.

2.  A driving simulation evaluation apparatus that comprises: a driving operation part receiving a driving operation; an information generating means for generating information concerning traffic circumstance of a road in response to the driving operation received by the driving operation part; and a displaying part displaying a video of the traffic circumstance on the basis of the information generated by the information generating means, and that evaluates safety of driving on the basis of the displayed video of the traffic circumstance, the driving simulation evaluation apparatus comprising:

    a detection simulation means for simulating detection of an object on the road on the basis of the information generated by the information generating means;
    a communication simulation means for simulating a situation of communication of information concerning the object detection-simulated by the detection simulation means to a vehicle-mounted apparatus; and
    a display means for displaying the detection-simulated object in accordance with the communication situation simulated by the communication simulation means.

3.  The driving simulation evaluation apparatus according to claim 2, wherein
    the detection simulation means simulates one or more detection parts for detecting an object, wherein
    the communication simulation means simulates the one or more communication parts that perform communication of the information concerning the object, and wherein
    a connection simulation means , when a plurality of detection parts or a plurality of communication parts are employed, is provided for simulating a connection situation between the detection part or parts and the communication part or parts.

4.  The driving simulation evaluation apparatus according to claim 2 or 3, comprising
    detection condition setting means for setting up a detection condition for an object, wherein
    the detection simulation means
    is constructed such as to simulate detection of an object in accordance with the detection condition set up by the detection condition setting means.

5.  The driving simulation evaluation apparatus according to claim 2 or 3, comprising
    storage means for storing detection accuracy distribution around a detection point where an object is to be detected, wherein

the detection simulation means
is constructed such as to simulate detection of an object on the basis of the stored detection accuracy distribution.

6. The driving simulation evaluation apparatus according to claim 2 or 3, comprising communication condition setting means for setting up a communication condition for the information concerning the object, wherein
the communication simulation means
is constructed such as to simulate a communication situation in accordance with the communication condition set up by the communication condition setting means.

7. The driving simulation evaluation apparatus according to claim 2 or 3, comprising storage means for storing communication situation distribution around a communication point where communication of the information concerning the object is to be performed, wherein
the communication simulation means
is constructed such as to simulate a communication situation on the basis of the stored communication situation distribution.

8. The driving simulation evaluation apparatus according to claim 2 or 3, comprising recording means for recording the object detection-simulated by the detection simulation means or alternatively the communication situation simulated by the communication simulation means in response to the driving operation received by the driving operation part.

9. A driving simulation evaluation apparatus that comprises: a driving operation part for receiving a driving operation; information generating means for generating information concerning traffic circumstance of a road in response to the driving operation received by the driving operation part; and a display part for displaying a video of the traffic circumstance on the basis of the information generated by the information generating means, and that evaluates safety of driving on the basis of the displayed video of the traffic circumstance, wherein the driving simulation evaluation apparatus is **characterized by** comprising:

   detection simulation means for simulating detection of an object on the road on the basis of the information generated by the information generating means;
   communication simulation means for simulating a situation of communication of information concerning the object detection-simulated by the detection simulation means; and
   intervention control means for generating an intervention control signal for vehicle control required from necessity of vehicle control for safe running in accordance with the communication situation simulated by the communication simulation means on the basis of the information concerning the detection-simulated object and a given criterion, and outputting the signal to the driving operation part or alternatively the information generating means, wherein
   when the driving operation part receives the intervention control signal, the intervention operation represented by the intervention control signal is received as driving operation, while when the information generating means receives the intervention control signal, a traffic circumstance is generated that is in accordance with intervention operation corresponding to the intervention control signal.

10. The driving simulation evaluation apparatus according to claim 2, 3, or 9, further comprising speech synthesis means for notifying the information concerning the object detection-simulated by the detection simulation means, to a driver by speech synthesis.

11. A computer program for generating information concerning traffic circumstance of a road in response to received driving operation, and displaying a video of the traffic circumstance on the basis of the generated information so as to evaluate safety of driving, wherein the computer program causes
a computer to serve as:

   detection simulation means for simulating detection of an object on the road on the basis of the generated information; and
   communication simulation means for simulating a communication situation of information concerning the detection-simulated object to a vehicle-mounted apparatus.

FIG. 1

F I G. 2

F I G. 3

VEHICLE BEHAVIOR SURROUNDING ENVIRONMENT GENERATING PART

OWN-VEHICLE INFORMATION
OTHER-VEHICLE INFORMATION
ENVIRONMENT INFORMATION

~20
VIRTUAL SENSING PART

~22
EXTERNAL INFORMATION BUFFER

~23
VIDEO CAMERA SENSOR PART

231~ PERIOD TIMER PART

~211
232~ CAMERA IMAGE GENERATING PART — INSTALLATION INFORMATION

233~ FRAME COMPRESSION PART

234~ FRAME TRANSFERRING PART

FRAME DATA

TO VIRTUAL COMMUNICATION PART

EP 2 101 304 A1

FIG. 4

VIDEO CAMERA SETTINGS

VIDEO CAMERA
COORDINATES (m)    X : [     ]    Y : [     ]    Z : [     ]

VIDEO CAMERA
ORIENTATION VECTOR    X : [     ]    Y : [     ]    Z : [     ]

VIEW ANGLE    [     ] DEGREES

RESOLUTION    ○ 640X480    ⊙ 320X240

FRAME RATE    ⊙ 10Hz    ○ 30Hz

INFRARED MODE    ○ ON    ⊙ OFF

[ O K ]    [ CANCEL ]

FIG. 5

| DATA SIZE |
|---|
| GENARATING TIME OF DAY |
| ERROR FLAG |
| COMPRESSION TYPE |
| COMPRESSED IMAGE DATA |

FIG. 6

FIG. 6

VEHICLE BEHAVIOR SURROUNDING ENVIRONMENT GENERATION PART

OWN-VEHICLE POSITION
TIME OF DAY

40
VIRTUAL CUMMUNICATION PART

42
OWN-VEHICLE INFORMATION HOLDING PART

43
ANTENNA PART

431 COMMUNICATION PERIOD GENERATING PART

432 COMMUNICATION AREA DETERMINIMG PART

411 INSTALLATION INFORMATION

433 DELAY CONTROL PART

434 RADIO ARRIVAL RATE CONTROL PART

436 FRAME BUFFER HOLDING PART

435 ERROR CONTROL PART

FRAME DATA

VIRTUAL VEHICLE -MOUNTED DEVICE

FRAME DATA

VIRTUAL SENSING PART

FIG. 7

ANTENNA SETTINGS

ANTENNA
POSITION (m)    X : [        ]    Y : [        ]

DIRECTIVITY
DIRECTION VECTOR    X : [        ]    Y : [        ]

DIRECTIVITY
ANGLE    [        ] DEGREES

AREA DISTANCE    [        ] m

ARRIVAL RATE (%)    [ 100-5*L ]    $\left(\begin{array}{l} \text{L IS DIDTANCE} \\ \text{M FROM CENTER} \end{array}\right)$

TIME DELAY    [        ] MILLISECOND

ERROR RATE    [        ] PACKETS FOR ONE ERROR

[ O K ]    [ CANCEL ]

EP 2 101 304 A1

FIG. 8

DATA LENGTH

FRAME DATA

PACKET

PACKET HAVING ERROR

F I G. 9

F I G. 1 0

F I G. 1 1

DATA FORMAT

| POSITION COORDINATES (x, y) | ARRIVAL RATE (r) |
|---|---|

FIG. 12

WHERE RADIO
ARRIVAL RATE
IS ACQUIRED
(OWN-VEHICLE
POSITION)

F I G. 1 3

FRAME DATA

60 VIRTUAL VEHICLE-MOUNTED DEVICE

61 FRAME DATA RECEIVING PART

62 IMAGE EXPANSION PART

63 NOISE SYNTHESIZING PART

64 TIMER RESET PART

IMAGE

NOISE

RESET INSTRUCTION

GENERATED IMAGE

BLACKOUT GENERATED

65 RECEIVING INTERVAL MONITORING TIMER

DRIVING ASSIST MONITOR

F I G. 1 4

BLACKOUT OUT OF
RANGE OF RADIO

VIDEO CAMERA
IMAGE

VIDEO CAMERA
IMAGE
SYNTHESIZED
WITH ·NOISE

# FIG. 15

OTHER VEHICLE

VIDEO CAMERA

ANTENNA

OWN VEHICLE

AROUND 5 m OF DISTANCE FROM ANTENNA

AROUND 10 m OF DISTANCE FROM ANTENNA

AROUND 25 m OF DISTANCE FROM ANTENNA

CHANGE OF IMAGES

EP 2 101 304 A1

FIG. 16

```
                    ( START )
                        |
  +---------------------------------------------+
  |      ACQUIRE  SENSOR  PARAMETERS            | S11
  +---------------------------------------------+
                        |
  +---------------------------------------------+
  |    ACQUIRE  COMMUNICATION  PARAMETERS       | S12
  +---------------------------------------------+
                        |<----------------------+
  +---------------------------------------------+
  |   ACQUIRE  OWN-VEHICLE  INFORMATION,        | S13
  |   OTHER-VEHICLE  INFORMATION  AND           |
  |   ENVIRONMENTAL  INFORMATION                |
  +---------------------------------------------+
                        |
  +---------------------------------------------+
  |      GENERATE  VIDEO  CAMERA  IMAGE         | S14
  +---------------------------------------------+
                        |
  +---------------------------------------------+
  |        CONVERT  INTO  FRAME  DATA           | S15
  +---------------------------------------------+
                        |
  +---------------------------------------------+
  |   PERFORM  COMMUNICATION  DELAY  CONTROL    | S16
  +---------------------------------------------+
                        |
  +---------------------------------------------+
  |   PERFORM  RADIO  ARRIVAL  RATE  CONTROL    | S17
  +---------------------------------------------+
                        |
  +---------------------------------------------+
  |        PERFORM  ERROR  CONTROL             | S18
  +---------------------------------------------+
                        |
  +---------------------------------------------+
  |       GENERATE  DISPLAY  IMAGE             | S19
  +---------------------------------------------+
                        |
  +---------------------------------------------+
  |           DISPLAY  IMAGE                   | S20
  +---------------------------------------------+
                        |
                                      S21
                     /  INSTRUCTION  \
                    <   OF TERMINATION OF  >  NO ----+
                     \    PROCESSING?    /
                        \            /
                           | YES
                      ( END )
```

FIG. 17

FIG. 17  100

DRIVING ENVIRONMENT PART  10

DRIVER

FIELD-OF-VIEW MONITOR  11

DRIVING OPERATION INPUT PART  12

OPERATION RECORDING PART  13

DRIVING ASSIST MONITOR  14

VEHICLE BEHAVIOR RECORDING PART  91

SENSING RECORDING PART  92

ACCURACY MAP PART  93

VEHICLE BEHAVIOR SURROUNDING ENVIRONMENT GENERATING PART  90

VIRTUAL SENSING PART  20

SENSOR PARAMETER SETTING PART  21

SENSOR PARAMETER HOLDING PART  94

CONNECTION MANAGEMENT PART  80

COMMUNICATION SITUATION MAP PART  95

VIRTUAL VEHICLE-MOUNTED DEVICE  60

VIRTUAL COMMUNICATION PART  40

COMMUNICATION PARAMETER SETTING PART  41

INFORMATION PROVIDING RECORDING PART  98

COMMUNICATION RECORDING PART  97

COMMUNICATION PARAMETER HOLDING PART  96

EP 2 101 304 A1

32

FIG. 18

SENSOR 2

SENSOR 1

ANTENNA

OWN VEHICLE

FIG. 19

VEHICLE BEHAVIOR SURROUNDING ENVIRONMENT GENERATING PART

OWN-VEHICLE INFORMATION

OTHER-VEHICLE INFORMATION

ENVIRONMENT INFORMATION

~20

VIRTUAL SENSING PART

EXTERNAL INFORMATION BUFFER

22

~24

OBJECT SENSOR PART

SENSOR ID:1

~25

OBJECT SENSOR PART

SENSOR ID:2

~241

PERIOD TIMER PART

~242

DATA CONVERSION PART

~211

INSTALLATION INFORMATION

~243

DATA FLUCTUATION GENERATING PART

~244

DATA TRANSFER PART

MEASUREMENT DATA

TO CONNECTION MANAGEMENT PART

EP 2 101 304 A1

F I G. 2 0

FIG. 21

MEASUREMENT DATA FORMAT

| SENSOR ID |
|:---:|
| TIME OF DAY (FROM ENVIRONMENTAL INFORMATION) |
| LANE AREA $(x1, y1) \sim (x4, y4)$ |
| WIDTH w OF OTHER VEHICLE, SPEED v |
| DISTANCE L TO CROSSING |

FIG. 22

F I G. 2 3

~80

SENSOR NODE 1

| NODE TYPE:SENSOR | ID:1 | PROCESSING DELAY TIME:20 ms |

OUTPUT DESTINATION: SYNTHESIS NODE 1

SENSOR NODE 2

NODE TYPE:SENSOR   ID:2   PROCESSING DELAY TIME:30 ms

OUTPUT DESTINATION: SYNTHESIS NODE 1

SYNTHESIS NODE 1

NODE TYPE:SYNTHESIS   ID:10   PROCESSING DELAY TIME:30 ms

SYNTHESIS TYPE:AND

OUTPUT DESTINATION: ANTENNA NODE 1

INPUT SOURCE: SENSOR NODE 1 — SENSOR NODE 2

ANTENNA NODE 1

NODE TYPE:ANTENNA   ID:100

INPUT SOURCE: SYNTHESIS NODE 1

FIG. 24

| TIME OF DAY (ADDED BY PROCESSING DELAY TIME) | |
|---|---|
| NUMBER OF SENSORS | |
| SENSOR ID | |
| LANE AREA (x1, y1) ~ (x4, y4) | |
| WIDTH w OF OTHER VEHICLE, SPEED v | SENSOR 1 |
| DISTANCE L TO CROSSING | |
| SENSOR ID | |
| LANE AREA (x1, y1) ~ (x4, y4) | |
| WIDTH w OF OTHER VEHICLE, SPEED v | SENSOR 2 |
| DISTANCE L TO CROSSING | |

FIG. 25

F I G. 2 6

WIDTH OF
OTHER VEHICLE

AMOUND OF SPEED

DISTANCE
TO CROSSING

FIG. 27    100

DRIVING ENVIRONMENT PART — 10

FIELD-OF-VIEW MONITOR — 11

DRIVING OPERATION INPUT PART — 12

OPERATION RECORDING PART — 13

DRIVING ASSIST MONITOR — 14

DRIVER

VEHICLE BEHAVIOR RECORDING PART — 91

SENSING RECORDING PART — 92

ACCURACY MAP PART — 93

VEHICLE BEHAVIOR SURROUNDING ENVIRONMENT GENERATING PART — 90

VIRTUAL SENSING PART — 20

SENSOR PARAMETER SETTING PART — 21

SENSOR PARAMETER HOLDING PART — 94

INTERVENTION CONTROL PART — 70

CONNECTION MANAGEMENT PART — 80

COMMUNICATION SITUATION MAP PART — 95

VIRTUAL VEHICLE-MOUNTED DEVICE — 60

VIRTUAL COMMUNICATION PART — 40

COMMUNICATION PARAMETER SETTING PART — 41

INFORMATION PROVIDING RECORDING PART — 98

COMMUNICATION RECORDING PART — 97

COMMUNICATION PARAMETER HOLDING PART — 96

EP 2 101 304 A1

F I G. 2 8

```
┌─────────────────────────────────┐
│ VEHICLE BEHAVIOR SURROUNDING     │~90
│ ENVIRONMENT GENERATING PART      │
└─────────────────────────────────┘
```

OWN-VEHICLE INFORMATION

ENVIRONMENTAL INFORMATION

INTERVENTION CONTROL PART ~70

OWN-VEHICLE ENVIRONMENT DATA RECEIVING PART ~71

OWN-VEHICLE ENVIRONMENT DATA BUFFER 72

OWN-VEHICLE COURSE PREDICTION PART

~73

MEASURMENT DATA RECEIVING PART

75 MEASUREMENT DATA BUFFER

74

ON COMING VEHICLE COURSE PREDICTION PART

76

VIRTUAL VEHICLE-MOUNTED DEVICE ~60

MEASURE-MENT DATA

77~ COLLISION DETERMINATION PART

DRIVING INFORMATION

DRIVING OPERATION INPUT PART ~12

78~ INTERVENTION IGNITION PART

INTERVENTION CONTROL SIGNAL

EP 2 101 304 A1

<div align="center">

**INTERNATIONAL SEARCH REPORT**

</div>

| | International application No. |
|---|---|
| | PCT/JP2007/073364 |

**A. CLASSIFICATION OF SUBJECT MATTER**
*G08G1/00*(2006.01)i, *G06F19/00*(2006.01)i, *H04B7/26*(2006.01)i, *G09B9/05*
(2006.01)n

According to International Patent Classification (IPC) or to both national classification and IPC

**B. FIELDS SEARCHED**

Minimum documentation searched (classification system followed by classification symbols)
G08G1/00, G06F19/00, H04B7/26, G09B9/05

Documentation searched other than minimum documentation to the extent that such documents are included in the fields searched
Jitsuyo Shinan Koho 1922-1996 Jitsuyo Shinan Toroku Koho 1996-2008
Kokai Jitsuyo Shinan Koho 1971-2008 Toroku Jitsuyo Shinan Koho 1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-272158 A (Mitsubishi Electric Corp.), 08 October, 1999 (08.10.99), Par. Nos. [0018] to [0023], [0026], [0029], [0036], [0037], [0067] (Family: none) | 1-11 |
| Y | JP 2002-260157 A (Director General of National Institute for Land and Infrastructure Management), 13 September, 2002 (13.09.02), Par. Nos. [0009], [0010] (Family: none) | 1-11 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 February, 2008 (26.02.08) | 04 March, 2008 (04.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

| | INTERNATIONAL SEARCH REPORT | International application No. |
|---|---|---|
| | | PCT/JP2007/073364 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-157673 A  (Director General of National Institute for Land and Infrastructure Management),<br>31 May, 2002 (31.05.02),<br>Par. No. [0028]<br>(Family: none) | 8 |
| A | JP 2003-114607 A  (Ergo Seating Co., Ltd.),<br>18 April, 2003 (18.04.03),<br>Par. No. [0029]<br>(Family: none) | 1-11 |
| A | JP 2004-227505 A  (Director General of National Institute for Land and Infrastructure Management),<br>12 August, 2004 (12.08.04),<br>Par. Nos. [0010] to [0014]<br>& US 2004/0145495 A1 | 1-11 |

Form PCT/ISA/210 (continuation of second sheet) (April 2007)

**EP 2 101 304 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11272158 B